# EUROPEAN PATENT SPECIFICATION

(11) **EP 3 586 555 B1**
(45) Date of publication and mention of the grant of the patent: **20.11.2024**
(21) Application number: 18705795.5
(22) Date of filing: 04.02.2018
(51) Int. Cl.: H04W 72/20, H04W 72/23, H04W 72/0446

(54) **INDICATION CHANNEL TECHNIQUES FOR LOW LATENCY WIRELESS COMMUNICATIONS**
ANZEIGEKANALTECHNIKEN FÜR DRAHTLOSE KOMMUNIKATION MIT NIEDRIGER LATENZZEIT
TECHNIQUES DE CANAL D'INDICATION POUR COMMUNICATIONS SANS FIL À FAIBLE LATENCE

(30) Priority: 27.02.2017 US 201762464359 P; 01.02.2018 US 201815886416
(43) Date of publication of application: 01.01.2020
(73) Proprietor: Qualcomm Incorporated, San Diego, CA 92121-1714 (US)
(72) Inventor: HOSSEINI, Seyedkianoush, San Diego, California 92121-1714 (US); LI, Chong, San Diego, California 92121-1714 (US); JIANG, Jing, San Diego, California 92121-1714 (US); MANOLAKOS, Alexandros, San Diego, California 92121-1714 (US)
(74) Representative: Dunlop, Hugh Christopher
(86) International application number: PCT/US2018/016775
(87) International publication number: WO 2018/156339

(56) References cited:
- QUALCOMM INCORPORATED: "DL URLLC/eMBB dynamic multiplexing and indication design", vol. RAN WG1, no. Athens, Greece; 20170213 - 20170217, 12 February 2017 (2017-02-12), XP051209790, Retrieved from the Internet <URL:http://www.3gpp.org/ftp/Meetings_3GPP_SYNC/RAN1/Docs/> [retrieved on 20170212]
- QUALCOMM INCORPORATED: "URLLC/eMBB downlink dynamic multiplexing schemes", vol. RAN WG1, no. Spokane, Wa; 20170116 - 20170120, 16 January 2017 (2017-01-16), XP051208346, Retrieved from the Internet <URL:http://www.3gpp.org/ftp/Meetings_3GPP_SYNC/RAN1/Docs/> [retrieved on 20170116]
- SAMSUNG: "Summary of e-mail discussions on multiplexing eMBB and URLLC in DL", vol. RAN WG1, no. Spokane, USA; 20170116 - 20170120, 16 January 2017 (2017-01-16), XP051208487, Retrieved from the Internet <URL:http://www.3gpp.org/ftp/Meetings_3GPP_SYNC/RAN1/Docs/> [retrieved on 20170116]

## Description

### BACKGROUND

The following relates generally to wireless communication, and more specifically to indication channel techniques for low latency wireless communications.

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include code division multiple access (CDMA) systems, time division multiple access (TDMA) systems, frequency division multiple access (FDMA) systems, and orthogonal frequency division multiple access (OFDMA) systems, (e.g., a Long Term Evolution (LTE) system, or a New Radio (NR) system). A wireless multiple-access communications system may include a number of base stations or access network nodes, each simultaneously supporting communication for multiple communication devices, which may be otherwise known as user equipment (UE).

In some examples, a wireless multiple-access communication system may include a number of base stations, each simultaneously supporting communication for multiple communication devices, otherwise known as user equipment (UE). In a LTE or LTE-Advanced (LTE-A) network, a set of one or more base stations may define an eNodeB (eNB). In other examples (e.g., in a next generation new radio (NR) or 5G network), a wireless multiple access communication system may include a number of smart radio heads (RHs) in communication with a number of access node controllers (ANCs), where a set of one or more RHs, in communication with an ANC, defines a base station (e.g., an eNB or gNB). A base station may communicate with a set of UEs on downlink (DL) channels (*e.g.,* for transmissions from a base station to a UE) and uplink (UL) channels (*e.g.,* for transmissions from a UE to a base station).

A base station in some LTE or NR deployments may transmit to one or more UEs using different length transmission time intervals (TTIs) that may be selected based on a service that is being provided. In some examples, a reduced length TTI may support some low latency wireless services that provide low latency with high reliability for wireless transmissions of the low latency or mission critical services. Reduced length TTIs may be a subset of a longer TTI such as a slot-TTI, and in some cases, low latency services using reduced length TTIs may puncture other services that may have longer TTIs. Such puncturing may result in portions of transmissions of the longer TTI service not being received at the receiver of the transmission. Qualcomm Incorporated: "DL URLLC/eMBB dynamic multiplexing and indication design", 3GPP Draft; R1-1702639 discusses URLLC and eMBB multiplexing and mini-slot designs including pre-emption multiplexing of eMBB and URLLC in DL and UL. Qualcomm Incorporated: "URLLC/eMBB downlink dynamic multiplexing schemes", 3GPP Draft; R1-100827 discusses pre-emption multiplexing of eMBB and URLLC in DL and inter-cell interefefrence considerations for eMBB/URLLC multiplexing.

### SUMMARY

Aspects of the invention are set out in the appended set of claims.

### BRIEF DESCRIPTION OF THE DRAWINGS

FIG. 1 illustrates an example of a system for wireless communication that supports indication channel techniques for low latency wireless communications in accordance with aspects of the present disclosure.
FIG. 2 illustrates an example of a wireless communications system that supports indication channel techniques for low latency wireless communications in accordance with aspects of the present disclosure.
FIG. 3 illustrates an example of a current indication channel that supports indication channel techniques for low latency wireless communications in accordance with aspects of the present disclosure.
FIG. 4 illustrates an example of a periodic low latency resources and a current indication channel that supports indication channel techniques for low latency wireless communications in accordance with aspects of the present disclosure.
FIG. 5 illustrates an example of a process flow that supports indication channel techniques for low latency wireless communications in accordance with aspects of the present disclosure.
FIGs. 6 through 8 show block diagrams of a device that supports indication channel techniques for low latency wireless communications in accordance with aspects of the present disclosure.
FIG. 9 illustrates a block diagram of a system including a UE that supports indication channel techniques for low latency wireless communications in accordance with aspects of the present disclosure.
FIGs. 10 through 12 show block diagrams of a device that supports indication channel techniques for low latency wireless communications in accordance with aspects of the present disclosure.
FIG. 13 illustrates a block diagram of a system including a base station that supports indication channel techniques for low latency wireless communications in accordance with aspects of the present disclosure.
FIGs. 14 through 19 illustrate methods for indication channel techniques for low latency wireless communications in accordance with aspects of the present disclosure.

### DETAILED DESCRIPTION

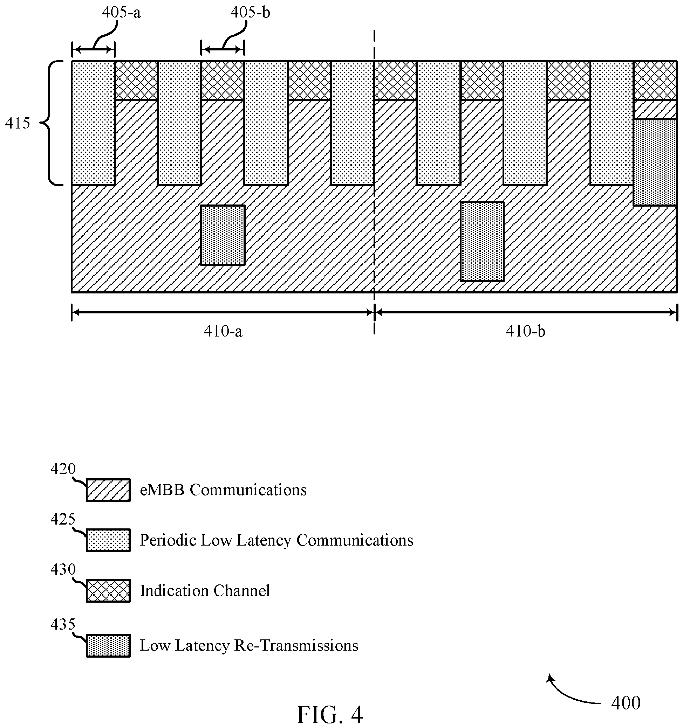

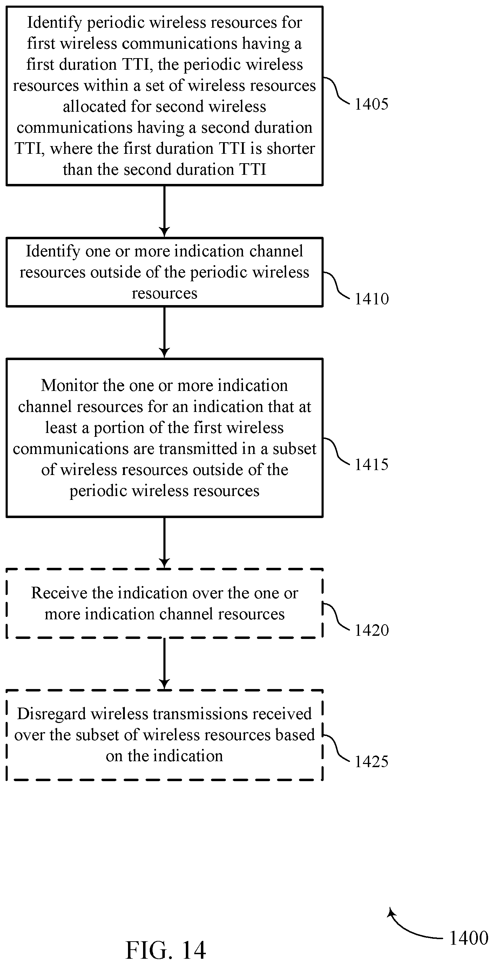

The invention made is disclosed in the embodiments relating to figures 4 and 14. Some wireless communications systems may support different types of wireless services that may use different transmission time intervals (TTIs), such as enhanced mobile broadband (eMBB) communications and low latency communications (*e.g.,* ultra reliable low latency communications (URLLC)). To facilitate low latency communications, a base station or user equipment (UE) may identify resources allocated for eMBB communications, and may reassign (or puncture) these resources for low latency communications. In certain deployments, low latency communications may be transmitted in a periodic manner. For example, in a factory automation deployment low latency communications may have a known periodicity. In such cases, certain periodic resources may be reserved for low latency communications, and a base station or UE may use such periodic low latency resources for low latency transmissions. The UE and base station may rate match higher latency communications around the periodic low latency resources, and thus the higher latency communications may have a lower likelihood of being punctured.

Furthermore, as indicated above, the base station may transmit an indication of the reassigned (or punctured) resources to one or more UEs. Specifically, the base station may transmit an indication of the reassigned resources over a designated indication channel during a time resource (*e.g.,* a mini-slot time resource) that is being reassigned (*e.g.,* a current indication). The current indication may be provided in a current indication channel and may include limited information indicating the location of the reassigned resources (or punctured resources). In cases where periodic low latency resources are identified, the indication channel may not be transmitted in the time resources (*e.g.,* a mini-slot) of the periodic low latency resources, and thus a UE may not monitor such resources for an indication channel transmission and may thereby consume fewer processing and power resources. In the event that a low latency transmission is transmitted outside of the periodic low latency resources, the higher latency communications may be punctured and an indication of the puncturing provided in the indication channel. A UE receiving the indication may disregard any signals received in the punctured resources when decoding the higher latency communications.

In some cases, a base station may activate and deactivate the periodic low latency resources through control channel signaling, and may transmit the indication channel in time resources outside of time resources that have the reserved periodic resources. A UE may determine that the periodic low latency resources are activated, may not monitor the periodic low latency resources for the indication channel, and may monitor resources outside of the periodic low latency resources for the indication channel.

Resources allocated for wireless transmissions may be used for uplink and/or downlink communications that are low latency communications, which may in some cases, puncture relatively latency insensitive communications such as eMBB transmissions. In some cases, a TTI duration for eMBB transmissions may correspond to one slot of a wireless subframe, one wireless subframe, one orthogonal frequency division multiplexing (OFDM) symbol, or multiple (*e.g.,* 2, 3, or 4) OFDM symbols. In some cases, wireless communications systems may use scalable TTI durations, and may provide for multiple different wireless services that may use different TTI durations based on latency requirements or quality of service (QoS) requirements of the service. Such different services may be selected depending upon the nature of the communications. For example, communications that require low latency and high reliability, sometimes referred to as mission critical (MiCr) communications, may be served through a URLLC service that uses reduced TTI durations (*e.g.,* one-symbol or two-symbol TTIs, which may be referred to as a mini-slot). Correspondingly, communications that are more delay-tolerant may be served through a service that provides relatively higher throughput with somewhat higher latency, such as a mobile broadband service (*e.g.,* an eMBB service) that uses slot TTIs, or 1 ms or longer TTIs. In other examples, communications may be with UEs that are incorporated into other devices (*e.g.,* meters, vehicles, appliances, machinery, *etc*.)*,* and a machine-type communication (MTC) service (*e.g.,* massive MTC (mMTC)) may be used for such communications. In some cases, different services (*e.g.,* eMBB, URLLC, mMTC) may have different TTIs, different sub-carrier (or tone) spacing and different cyclic prefixes.

The present disclosure describes various techniques with reference to 4G networks (*e.g.,* LTE networks) and next generation networks (*e.g.,* 5G or NR networks) that are being designed to support features such as high bandwidth operations, more dynamic subframe/slot types, and self-contained subframe/slot types (in which HARQ feedback for a subframe/slot may be transmitted before the end of the subframe/slot). However, such techniques may be used for any system in which low latency communications may be multiplexed with higher latency communications.

Aspects of the disclosure are initially described in the context of a wireless communications system. Various resources and process flows for indication channel transmissions, low latency transmissions, and higher latency transmissions are then described. Aspects of the disclosure are further illustrated by and described with reference to apparatus diagrams, system diagrams, and flowcharts that relate to indication channel techniques for low latency wireless communications.

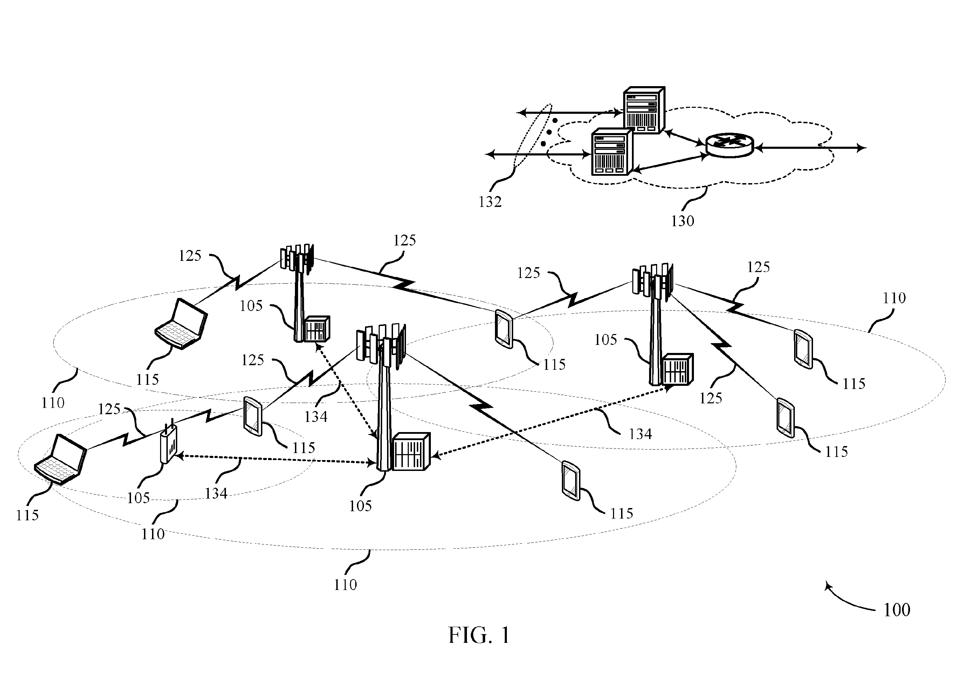

**FIG. 1** illustrates an example of a wireless communications system 100 in accordance with various aspects of the present disclosure. The wireless communications system 100 includes base stations 105, UEs 115, and a core network 130. In some examples, the wireless communications system 100 may be a Long Term Evolution (LTE), LTE-Advanced (LTE-A) network, or a New Radio (NR) network. In some cases, wireless communications system 100 may support enhanced broadband communications, ultra-reliable (*i.e.,* mission critical) communications, low latency communications, and communications with low-cost and low-complexity devices. Wireless communications system 100 may provide for wireless transmissions in which periodic resources may be configured for low latency transmissions and an indication channel may be provided to indicate low latency transmissions that are transmitted outside of the periodic resources. Such techniques may allow for higher reliability transmissions and efficient system operation.

Base stations 105 may wirelessly communicate with UEs 115 via one or more base station antennas. Each base station 105 may provide communication coverage for a respective geographic coverage area 110. Communication links 125 shown in wireless communications system 100 may include uplink (UL) transmissions from a UE 115 to a base station 105, or downlink (DL) transmissions, from a base station 105 to a UE 115. Control information and data may be multiplexed on an uplink channel or downlink according to various techniques. Control information and data may be multiplexed on a downlink channel, for example, using time division multiplexing (TDM) techniques, frequency division multiplexing (FDM) techniques, or hybrid TDM-FDM techniques. In some examples, the control information transmitted during a TTI of a downlink channel may be distributed between different control regions in a cascaded manner (*e.g.,* between a common control region and one or more UE-specific control regions).

UEs 115 may be dispersed throughout the wireless communications system 100, and each UE 115 may be stationary or mobile. A UE 115 may also be referred to as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 115 may also be a cellular phone, a personal digital assistant (PDA), a wireless modem, a wireless communication device, a handheld device, a tablet computer, a laptop computer, a cordless phone, a personal electronic device, a handheld device, a personal computer, a wireless local loop (WLL) station, an Internet of things (IoT) device, an Internet of Everything (loE) device, a machine type communication (MTC) device, an appliance, an automobile, or the like.

In some cases, a UE 115 may also be able to communicate directly with other UEs (*e.g.,* using a peer-to-peer (P2P) or device-to-device (D2D) protocol). One or more of a group of UEs 115 utilizing D2D communications may be within the coverage area 110 of a cell. Other UEs 115 in such a group may be outside the coverage area 110 of a cell, or otherwise unable to receive transmissions from a base station 105. In some cases, groups of UEs 115 communicating via D2D communications may utilize a one-to-many (1:M) system in which each UE 115 transmits to every other UE 115 in the group. In some cases, a base station 105 facilitates the scheduling of resources for D2D communications. In other cases, D2D communications are carried out independent of a base station 105.

Some UEs 115, such as MTC or loT devices, may be low cost or low complexity devices, and may provide for automated communication between machines, *i.e.,* Machine-to-Machine (M2M) communication. M2M or MTC may refer to data communication technologies that allow devices to communicate with one another or a base station without human intervention. For example, M2M or MTC may refer to communications from devices that integrate sensors or meters to measure or capture information and relay that information to a central server or application program that can make use of the information or present the information to humans interacting with the program or application. Some UEs 115 may be designed to collect information or enable automated behavior of machines. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

In some cases, an MTC device may operate using half-duplex (one-way) communications at a reduced peak rate. MTC devices may also be configured to enter a power saving "deep sleep" mode when not engaging in active communications. In some cases, MTC or loT devices may be designed to support mission critical functions and wireless communications system may be configured to provide ultra-reliable communications for these functions.

Base stations 105 may communicate with the core network 130 and with one another. For example, base stations 105 may interface with the core network 130 through backhaul links 132 (*e.g.,* S1, *etc.*). Base stations 105 may communicate with one another over backhaul links 134 (*e.g.,* X2, *etc*.) either directly or indirectly (*e.g.,* through core network 130). Base stations 105 may perform radio configuration and scheduling for communication with UEs 115, or may operate under the control of a base station controller (not shown). In some examples, base stations 105 may be macro cells, small cells, hot spots, or the like. Base stations 105 may also be referred to as eNodeBs (eNBs) 105 or gNodeBs (gNBs) 105.

A base station 105 may be connected by an S1 interface to the core network 130. The core network may be an evolved packet core (EPC), which may include at least one MME, at least one S-GW, and at least one P-GW. The MME may be the control node that processes the signaling between the UE 115 and the EPC. All user IP packets may be transferred through the S-GW, which itself may be connected to the P-GW. The P-GW may provide IP address allocation as well as other functions. The P-GW may be connected to the network operators IP services. The operators IP services may include the Internet, the Intranet, an IP Multimedia Subsystem (IMS), and a Packet-Switched (PS) Streaming Service (PSS).

The core network 130 may provide user authentication, access authorization, tracking, Internet Protocol (IP) connectivity, and other access, routing, or mobility functions. At least some of the network devices, such as a base station 105 may include subcomponents such as an access network entity, which may be an example of an access node controller (ANC). Each access network entity may communicate with a number of UEs 115 through one or more access network transmission entities, each of which may be an example of a smart radio head, or a transmission/reception point (TRP). In some configurations, various functions of each access network entity or base station 105 may be distributed across various network devices (*e.g.,* radio heads and access network controllers) or consolidated into a single network device (*e.g.,* a base station 105).

In some cases, wireless communications system 100 may be a packet-based network that operate according to a layered protocol stack. In the user plane, communications at the bearer or Packet Data Convergence Protocol (PDCP) layer may be IP-based. A Radio Link Control (RLC) layer may in some cases perform packet segmentation and reassembly to communicate over logical channels. A Medium Access Control (MAC) layer may perform priority handling and multiplexing of logical channels into transport channels. The MAC layer may also use Hybrid ARQ (HARQ) to provide retransmission at the MAC layer to improve link efficiency. In the control plane, the Radio Resource Control (RRC) protocol layer may provide establishment, configuration, and maintenance of an RRC connection between a UE 115 and a network device or core network 130 supporting radio bearers for user plane data. At the Physical (PHY) layer, transport channels may be mapped to physical channels.

Time intervals in LTE or NR may be expressed in multiples of a basic time unit (which may be a sampling period of Tₛ = 1/30,720,000 seconds). Time resources may be organized according to radio frames of length of 10ms (T_{f} = 307200Tₛ), which may be identified by a system frame number (SFN) ranging from 0 to 1023. Each frame may include ten 1ms subframes numbered from 0 to 9. A subframe may be further divided into two 0.5ms slots, each of which contains 6 or 7 modulation symbol periods (depending on the length of the cyclic prefix prepended to each symbol). Excluding the cyclic prefix, each symbol contains 2048 sample periods. In some cases the subframe may be the smallest scheduling unit, also known as a TTI. In other cases, as discussed above, a TTI may be shorter than a subframe or may be dynamically selected (*e.g.,* in short TTI bursts or in selected component carriers using short TTIs).

Wireless communications system 100 may support operation on multiple cells or carriers, a feature which may be referred to as carrier aggregation (CA) or multi-carrier operation. A carrier may also be referred to as a component carrier (CC), a layer, a channel, *etc.* The terms "carrier," "component carrier," "cell," and "channel" may be used interchangeably herein. A UE 115 may be configured with multiple downlink CCs and one or more uplink CCs for carrier aggregation. Carrier aggregation may be used with both FDD and TDD component carriers.

In some cases, wireless communications system 100 may utilize enhanced component carriers (eCCs). An eCC may be characterized by one or more features including: wider bandwidth, shorter symbol duration, shorter transmission time interval (TTIs), and modified control channel configuration. In some cases, an eCC may be associated with a carrier aggregation configuration or a dual connectivity configuration (*e.g.,* when multiple serving cells have a suboptimal or non-ideal backhaul link). An eCC may also be configured for use in unlicensed spectrum or shared spectrum (where more than one operator is allowed to use the spectrum). An eCC characterized by wide bandwidth may include one or more segments that may be utilized by UEs 115 that are not capable of monitoring the whole bandwidth or prefer to use a limited bandwidth (*e.g.,* to conserve power). In some cases, an eCC may utilize a different symbol duration than other CCs, which may include use of a reduced symbol duration as compared with symbol durations of the other CCs. A shorter symbol duration may be associated with increased subcarrier spacing. A TTI in an eCC may consist of one or multiple symbols. In some cases, the TTI duration (that is, the number of symbols in a TTI) may be variable.

As discussed above, in certain deployments one or more of the UEs 115 may use low latency communications in a scheduled or periodic manner (*e.g.,* UEs 115 in a factory automation deployment). In such cases, certain periodic resources may be reserved for low latency communications, and a base station 105 or UE 115 may use such periodic low latency resources for low latency transmissions. The UE 115 and base station 105 may rate match higher latency communications around the periodic low latency resources, and thus the higher latency communications may have a lower likelihood of being punctured by low latency communications, which may enhance the likelihood of successful reception of both the low latency communications and the higher latency communications and thereby enhance system efficiency.

Furthermore, as indicated above, a base station 105 may transmit an indication of the reassigned (or punctured) resources to one or more UEs 115. Specifically, the base station 150 may transmit an indication (*e.g.,* a current indication) of the reassigned resources over a designated indication channel (*e.g.,* a current indication channel) during a time resource (*e.g.,* a mini-slot time resource) that is being reassigned. In cases where periodic low latency resources are identified, the indication channel may not be transmitted in the time resources (*e.g.,* a mini-slot) of the periodic low latency resources, and thus a UE may skip monitoring such resources for an indication channel transmission. Thus, resources that would otherwise be assigned to the current indication channel may be used for other transmissions (*e.g.,* physical downlink shared channel (PDSCH) or physical uplink shared channel (PUSCH) transmissions), and UEs 115 may consume fewer processing and power resources associated with receiving and decoding the indication channel. In the event that a low latency transmission is transmitted outside of the periodic low latency resources, the higher latency communications may be punctured and an indication of the puncturing provided in the indication channel. A UE 115 receiving such an indication may disregard any signals received in the punctured resources when decoding the higher latency communications.

In some cases, a base station 105 may activate and deactivate the periodic low latency resources through control channel signaling, and may transmit the indication channel in time resources outside of time resources that have the reserved periodic resources. A UE 115 may determine that the periodic low latency resources are activated, and may monitor resources outside of the periodic low latency resources for the indication channel while not monitoring the periodic low latency resources for the indication channel.

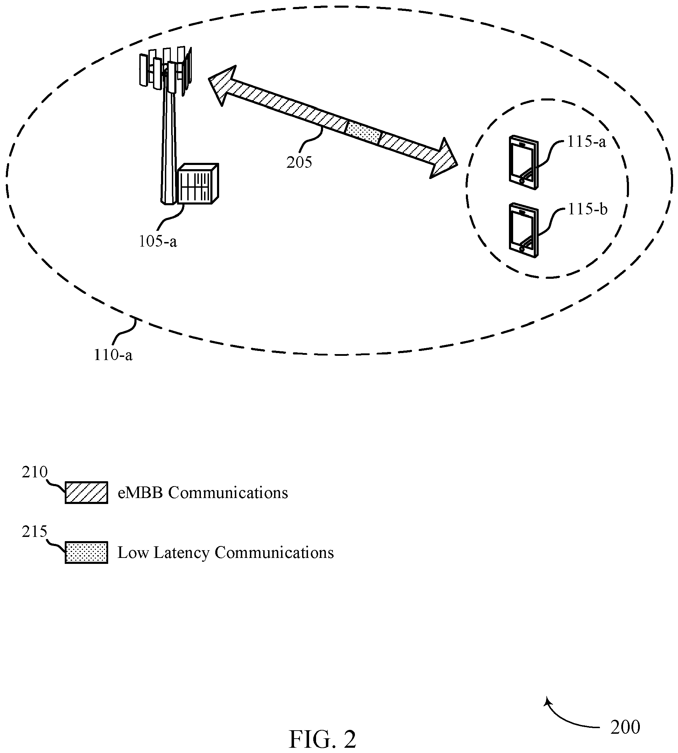

**FIG. 2** illustrates an example of a wireless communications system 200 that supports indication channel techniques for low latency wireless communications in accordance with various aspects of the present disclosure. Wireless communications system 200 may include base station 105-a, which may be an example of a base station 105 described with reference to FIG. 1. Wireless communications system 200 may also include UE 115-a and UE 115-b, which may be examples of a UE 115 described with reference to FIG. 1.

In this example, UE 115-a may operate in a low latency mode and may be referred to as a low latency UE 115-a, and UE 115-b may operate in an eMBB mode and may be referred to as an eMBB UE 115-b. Base station 105-a may provide communication coverage for a respective coverage area 110-a, which may be an example of a coverage area 110 described with reference to FIG. 1. Although the example of FIG. 2 describes communication between a base station and two UEs, it is to be understood that the techniques described herein are applicable to a single UE capable of operating in an eMBB mode and a low latency mode, or to any number of UEs 115 that may operate in one or both eMBB and low latency modes.

Wireless communications system 200 may support multiple different services that may use different TTIs and have different latency requirements, such as eMBB communications 210 and low latency communications 215. As discussed above, low latency UE 115-a may operate in an low latency mode and may communicate with base station 105-a over carrier 205 (*e.g.,* low latency communications 215), and eMBB UE 115-b may operate in an eMBB mode and may communicate with base station 105-a over the same carrier 205 (*e.g.,* eMBB communications 210). As described with reference to FIG. 1, low latency communications 215 may puncture eMBB communications 210 due to the low latency communications 215 having a higher priority than eMBB communications 201. Accordingly, when base station 105-a or low latency UE 115-a identifies low latency data to transmit, base station 105-a may reassign resources originally allocated for eMBB communications 210 for low latency communications 215 (*e.g.,* using puncturing). In such cases, it may be appropriate for the base station 105-a to indicate, via an indication channel the time and frequency resources reassigned for low latency communications 215 (*e.g.,* punctured resources). When the eMBB UE 115-b receives such an indication, it can disregard the information received over the indicated resources, such as by setting log likelihood ratios (LLRs) to zero over the indicated resources, which can enhance system decoding performance.

Further, as indicated above, in some cases the low latency communications 215 may occur at a known periodicity. For example, UEs 115 may be deployed in a factory automation system and low latency UE 115-a may transmit low latency communications at a known periodicity (*e.g.* once every 120 seconds to report a real-time measurement or equipment status). Wireless communications system 200 may support efficient techniques for assigning periodic low latency resources for such low latency transmissions, and also for indicating resources outside of the assigned periodic low latency resources that are reassigned for low latency communications 215. Specifically, a base station 105-a may configure periodic low latency resources, which the low latency UE 115-a may use for low latency transmissions and that the eMBB UE 115-b may rate-match around for eMBB transmissions. The base station 105-a may transmit a current indicator in a current indication channel in resources that are not within the periodic low latency resources. In some examples, the current indicator may include a flag indicating resources reassigned for low latency communications 215, and may include an indication of the reassigned resources in addition to other information, such as power ratio information, modulation order information, *etc.* used for communication on resources of carrier 205.

UEs 115, as indicated above, may skip monitoring for the indication channel in the periodic low latency resources, and only monitor the indication channel in resources outside of the periodic low latency resources. Low latency transmissions may be transmitted outside of the periodic low latency resources, for example, if a retransmission of a low latency transmission is transmitted before another available periodic low latency resource. The UEs 115 may receive the current indicator and identify a strategy for communicating on the resources reassigned for low latency communications 215 based on the current indicator. For example, low latency UE 115-a may receive and decode the current indicator and may determine to transmit or monitor for a transmission on the resources reassigned for low latency communications 215. The eMBB UE 115-b may also receive and decode the indication, and may determine to refrain from communicating on the resources reassigned for low latency communications 215. If eMBB UE 115-b is unable to decode the current indicator, eMBB UE 115-b may proceed with normal communications on the resources originally allocated for eMBB communications 210.

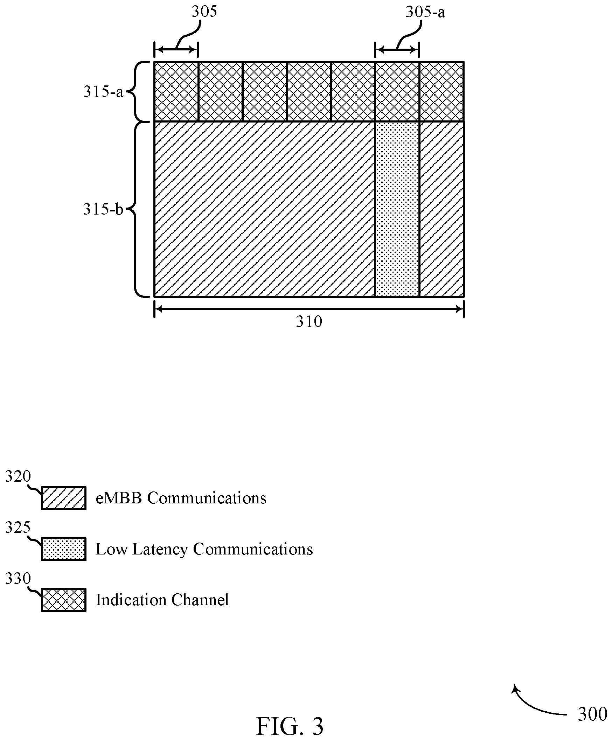

**FIG. 3** illustrates an example of wireless resources 300 having a current indication channel that supports indication channel techniques for low latency wireless communications in accordance with various aspects of the present disclosure. Wireless resources 300 may be used for eMBB and low latency transmissions between a UE and a base station such as discussed above with respect to FIGs. 1 and 2.

A base station may allocate resources of a slot 310, which may contain a number of mini-slots 305, which in some examples corresponds to an OFDM symbol. The base station, within the slot 310 may allocate frequency region 315-a for control information (i.e., as an indication channel 330) and frequency region 315-b for eMBB communications 320. In some cases, the base station or a UE operating in an ultra-reliable low latency mode may identify low latency data to transmit. In such cases, the base station may reassign (or puncture) resources allocated for eMBB communications 320 to accommodate low latency communications 325. Accordingly, it may be appropriate for the base station to transmit an indication of the resources reassigned (or punctured) for the low latency communications 325.

In some examples, the base station may transmit the indication in the indication channel 330. Specifically, for low latency communications in mini-slot 305-a, the base station may transmit the indication in corresponding indication channel 330 resources. Such an indication may be referred to as a current indication. The use of the current indication may provide sufficient time for a HARQ process (*e.g.,* for a HARQ turn-around) and may support low latency since a UE is able to identify reassigned resources immediately. However, the use of a current indication may result in relatively high overhead from the resources allocated for indication channel 330 and for monitoring and processing of transmissions in the indication channel 330. Additionally, as discussed above, in some cases UEs may be in a deployment that provides known or periodic low latency transmissions. Accordingly, to reduce overhead, base station may configure certain resources for low latency communications and may transmit the indication channel only in time resources (*e.g.,* mini-slots) that do not have any periodic low latency resources.

**FIG. 4** illustrates an example of a periodic low latency resources and a current indication channel 400 that supports indication channel techniques for low latency wireless communications in accordance with various aspects of the present disclosure. The periodic low latency resources and a current indication channel 400 may be used for eMBB and low latency transmissions between a UE and a base station such as discussed above with respect to FIGs. 1 and 2.

In this example, a base station may allocate resources of slots 410, which may contain a number of mini-slots 405, similarly as discussed with respect to FIG. 3. Within each slot 410, the base station may allocate frequency region 415 for control information (*i.e.,* as an indication channel 430). In this example, the base station may identify that one or more UEs are present that may transmit low latency transmissions at periodic intervals. The base station may thus configure periodic low latency communications 425 resources, as well as resources for eMBB communications 420 that are outside of the resources configured for low latency communications 425. As discussed above, such periodic low latency resources may be configured in applications (*e.g.,* factory automation deployments) where low latency downlink and/or uplink traffic may occur at known periodic intervals. In some applications, the low latency communications 425 may be supported only at certain times, and may be unsupported at other times. In such cases, the indication channel 430 may be configured during each mini-slot 405 during time periods in which periodic low latency communications are not supported, and may be configured only in mini-slots 405 that do not have periodic low latency resources during time periods in which periodic low latency communications are supported.

In some cases, the base station may configure the resources for periodic low latency communications 425 as well as frequency resources over these time resources, and thus eMBB UEs and low latency UEs may identify such resources without associated indication channel 430 transmissions. In some cases, the base station may schedule the periodic low latency communications 425 once, and the periodicity and frequency resources may configurable and set by the higher layers. In some examples, a base station may enable and disable periodic resources for low latency communications 425, such as through RRC signaling, and UEs may monitor the indication channel 430 based on the periodic low latency communications 425 maybe enabled or disabled. In some cases, when periodic low latency communications 425 are disabled, the base station may discontinue sending any indication channel 430 transmission. In other cases, when periodic low latency communications 425 are disabled, the potential for other low latency transmissions may continue to be present, and an indication channel may be transmitted in a manner similarly as discussed above with respect to FIG. 3. In cases where no other low latency communications are configured, the indication channel may not be transmitted at all, and UEs may not perform monitoring of the indication channel until the periodic low latency transmissions are enabled again or until other low latency transmissions and associated indication channel transmissions are configured.

When periodic low latency communications 425 are enabled, an eMBB UE may know the associated time/frequency resources and may not search for the indication channel over mini-slots 405-a that include these resources, and some power saving can be achieved by the eMBB UEs. Further, low latency UEs may use the periodic low latency communications 425 for low latency transmissions and may not search for the indication channel to identify such low latency resources. Additionally, the eMBB communications 420 may be rate-matched around the resources assigned to the periodic low latency communications 425 and thus low latency transmissions would not puncture eMBB transmissions, thereby indication channel 430 transmissions in such resources may be skipped entirely. Hence, more resources can be preserved for both eMBB and low latency transmissions (*e.g.,* PUSCH or PDSCH transmissions).

However, if a low latency transmission is not successfully decoded, one or more retransmissions of the low latency transmission may be needed in order to meet high reliability and time constraints associated with certain low latency transmissions. In some cases, such retransmissions may be transmitted outside of the resources configured for periodic low latency communications 425. In such cases, an indication of such a low latency transmission may be signaled in indication channel 430 in mini-slots 405-b outside of mini-slots 405-a that have configured resources for periodic low latency communications 425. In such cases, low latency re-transmissions 435 may be transmitted outside of the resources configured for periodic low latency communications 425. An eMBB UE may thus search for the indication channel only over the mini-slots 405-b that not assigned to periodic low latency communications 425.

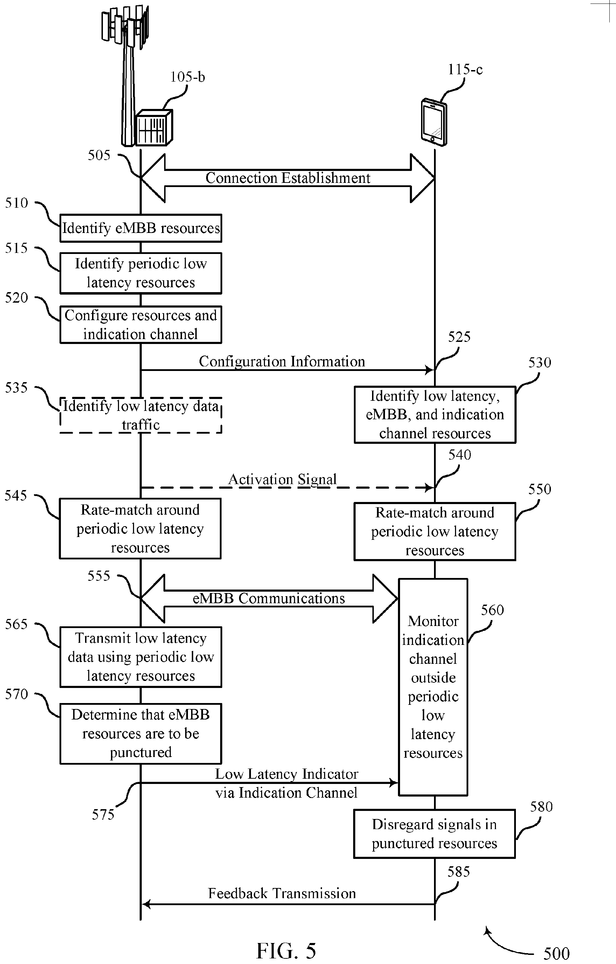

**FIG. 5** illustrates an example of a process flow 500 that supports indication channel techniques for low latency wireless communications in accordance with various aspects of the present disclosure. Process flow 500 may include a base station 105-b, and a UE 115-c, which may be examples of the corresponding devices described with reference to FIG. 1-2. The base station 105-b and the UE 115-c may establish a connection 505 according to connection establishment techniques for the wireless communications system. At block 510, the base station 105-b may identify eMBB resources for eMBB communications with the UE 115-c. For example, the base station 105-b may identify slot-TTI o r1 ms TTI resources for eMBB transmissions.

At block 515, the base station 105-b may identify periodic low latency resources. In some cases, the base station 105-b may determine that one or more UEs that are capable of low latency transmissions or that are configured for a URLLC service may transmit such low latency transmissions at known periodic intervals. In such cases, the base station 105-b may configure such low latency UEs to transmit such periodic low latency transmissions on certain frequency resources at the periodic intervals, and may identify the associated time/frequency resources as the periodic low latency resources.

At block 520, the base station 105-b may configure resources and an indication channel for communications with the UE 115-c. In some cases, the base station 105-b may configure periodic low latency resources, and eMBB resources that are outside of the periodic low latency resources. In some cases, the base station 105-b may configure the indication channel to be transmitted only in time resources (*e.g.,* mini-slots) that are outside of time resources of the configured periodic low latency resources. The base station 105-b may transmit the configuration information 525 to the UE 115-c. In some cases, the base station 105-b may configure the low latency resources and indication channel to be activated and deactivated based on the periodic time intervals of the low latency transmissions.

At block 530, the UE 115-c may identify the low latency resources, eMBB resources, and indication channel resources. In some cases, the configuration information may be provided using RRC signaling, and the UE 115-c may decode the RRC signaling and identify the resources that are configured for low latency transmissions, eMBB transmissions, and for the indication channel.

At optional block 535, the base station 105-b may identify low latency data traffic is to be transmitted. In some cases, such an identification may be made according to the periodic low latency intervals associated with the low latency UEs. In other cases, the base station 105-b may receive an indication that a UE is requesting a low latency service (*e.g.,* a URLLC) connection. Responsive to the identification of low latency data traffic, the base station 105-b may transmit activation signal 540 to the UE 115-c. The activation signal 540 may be transmitted, for example, in RRC signaling, in downlink control information (DCI), in a PDCCH transmission, or other signaling to the UE 115-c.

At block 545, the base station 105-b may rate match eMBB communications around the periodic low latency resources. Similarly, at block 550, the UE 115-c may rate match eMBB communications around the periodic low latency resources. Such rate matching may allow eMBB transmissions to be transmitted with a lower likelihood of being punctured by low latency communications and may enhance the likelihood of successful reception of eMBB (or other non-low latency) communications. Further, as rate matching is done around the periodic low latency resources, low latency transmissions in such resources will not puncture eMBB transmissions, and thus the UE 115-c may not monitor indication channel transmissions in the low latency resources, and the base station 105-b may not transmit the indication channel in time resources (e.g., mini-slots) having low latency resources, which may thus free resources for other transmissions.

The base station 105-b and the UE 115-c may initiate eMBB communications 555. During the eMBB communications 555, the UE 115-c may monitor the indication channel transmissions between periodic low latency resources, as indicated at block 560.

At block 565, the base station 105-b may transmit/receive low latency data using periodic low latency resources. Such low latency communications may be with the UE 115-c, and/or with one or more other low latency UEs. The periodic low latency transmissions may also include feedback transmissions (*e.g.,* HARQ ACK/NACK transmissions) in which successful or unsuccessful receipt of a low latency transmission may be provided.

In the event that a low latency transmission is unsuccessfully received, the base station 105-b may determine, at block 570, that eMBB resources are to be punctured. In some cases, the base station 105-b may determine that a retransmission of the low latency transmission is to be transmitted outside of the periodic low latency resources, and in resources that are configured for eMBB transmissions. The base station 105-b may transmit low latency indicator 575 (*e.g.,* a current indication) via the configured indication channel resources.

The UE 115-c may detect the low latency indicator and, at block 580, may disregard signals in the punctured resources. In some cases, the low latency indicator may indicate particular eMBB resources that are punctured for the low latency re-transmission, and the UE 115-c may set LLRs for the indicated resources to zero, which may enhance decoding of the eMBB transmissions that are punctured. The UE 115-c may, based on successful or unsuccessful reception of the eMBB transmissions, transmit a feedback transmission 585 (*e.g.,* a HARQ ACK/NACK transmission) to the base station 105-b. In some cases, feedback for the eMBB transmissions may be provided at a code block level rather than a transport block level, and may trigger retransmission of one or more eMBB code blocks that are not successfully received.

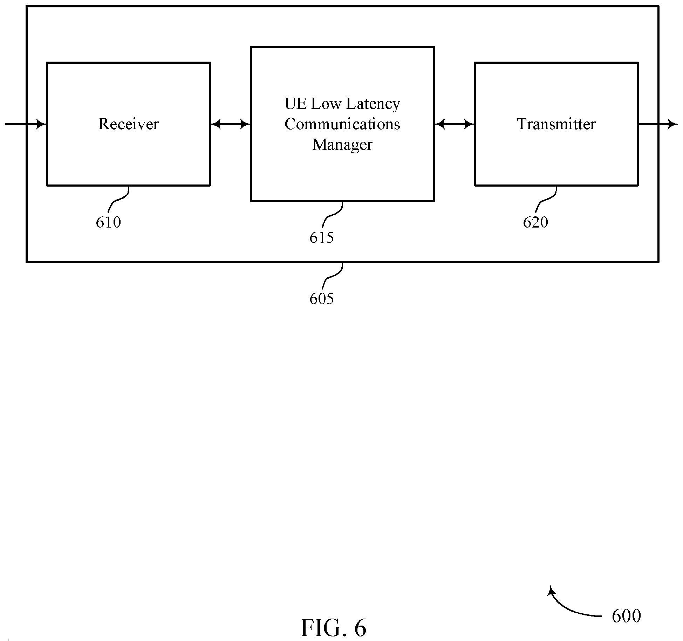

**FIG. 6** shows a block diagram 600 of a wireless device 605 that supports indication channel techniques for low latency wireless communications in accordance with aspects of the present disclosure. Wireless device 605 may be an example of aspects of a user equipment (UE) 115 as described with reference to FIG. 1. Wireless device 605 may include receiver 610, UE low latency communications manager 615, and transmitter 620. Wireless device 605 may also include a processor. Each of these components may be in communication with one another (*e.g.,* via one or more buses).

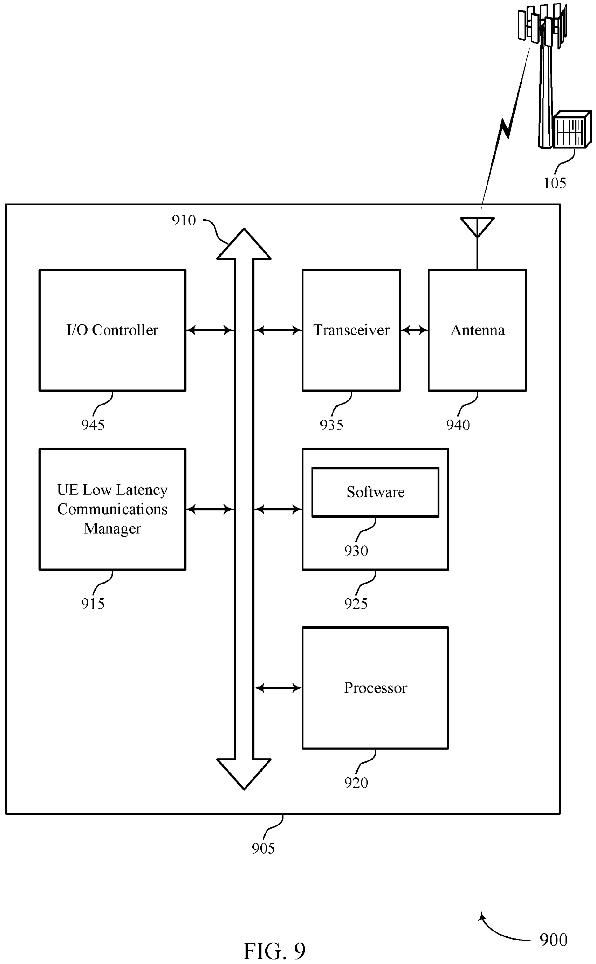

Receiver 610 may receive information such as packets, user data, or control information associated with various information channels (*e.g.,* control channels, data channels, and information related to indication channel techniques for low latency wireless communications, *etc.).* Information may be passed on to other components of the device. The receiver 610 may be an example of aspects of the transceiver 935 described with reference to FIG. 9. The receiver 610 may utilize a single antenna or a set of antennas.

UE low latency communications manager 615 may be an example of aspects of the UE low latency communications manager 915 described with reference to FIG. 9.

UE low latency communications manager 615 and/or at least some of its various sub-components may be implemented in hardware, software executed by a processor, firmware, or any combination thereof. If implemented in software executed by a processor, the functions of the UE low latency communications manager 615 and/or at least some of its various sub-components may be executed by a general-purpose processor, a digital signal processor (DSP), an application-specific integrated circuit (ASIC), an field-programmable gate array (FPGA) or other programmable logic device, discrete gate or transistor logic, discrete hardware components, or any combination thereof designed to perform the functions described in the present disclosure. The UE low latency communications manager 615 and/or at least some of its various sub-components may be physically located at various positions, including being distributed such that portions of functions are implemented at different physical locations by one or more physical devices. In some examples, UE low latency communications manager 615 and/or at least some of its various sub-components may be a separate and distinct component in accordance with various aspects of the present disclosure. In other examples, UE low latency communications manager 615 and/or at least some of its various sub-components may be combined with one or more other hardware components, including but not limited to an I/O component, a transceiver, a network server, another computing device, one or more other components described in the present disclosure, or a combination thereof in accordance with various aspects of the present disclosure.

UE low latency communications manager 615 may identify periodic wireless resources for first wireless communications having a first duration transmission time interval (TTI), the periodic wireless resources within a set of wireless resources allocated for second wireless communications having a second duration TTI, where the first duration TTI is shorter than the second duration TTI, identify one or more indication channel resources outside of (e.g., between one or more of) the periodic wireless resources, and monitor the one or more indication channel resources for an indication that at least a portion of the first wireless communications are transmitted in a subset of wireless resources outside of the periodic wireless resources.

Transmitter 620 may transmit signals generated by other components of the device. In some examples, the transmitter 620 may be collocated with a receiver 610 in a transceiver module. For example, the transmitter 620 may be an example of aspects of the transceiver 935 described with reference to FIG. 9. The transmitter 620 may utilize a single antenna or a set of antennas.

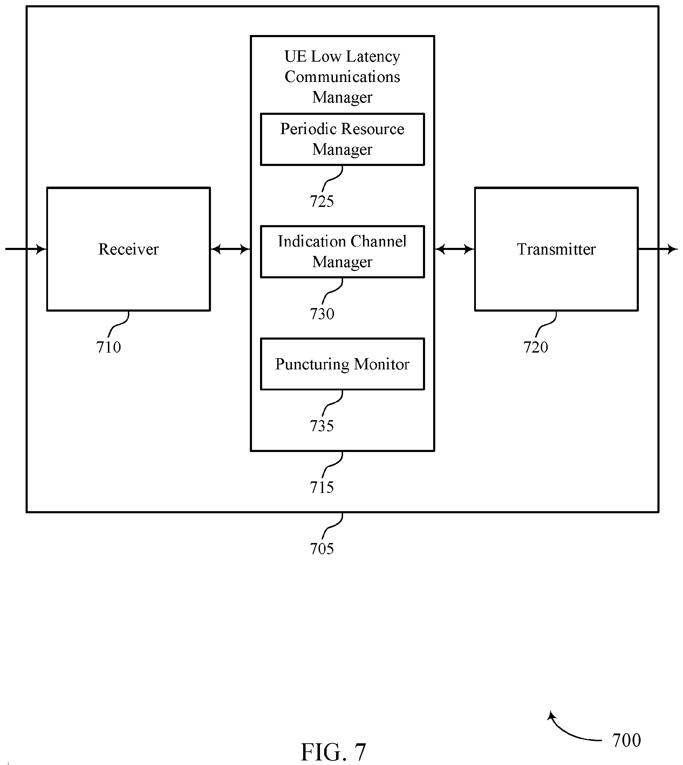

**FIG. 7** shows a block diagram 700 of a wireless device 705 that supports indication channel techniques for low latency wireless communications in accordance with aspects of the present disclosure. Wireless device 705 may be an example of aspects of a wireless device 605 or a UE 115 as described with reference to FIGs. 1 and 6. Wireless device 705 may include receiver 710, UE low latency communications manager 715, and transmitter 720. Wireless device 705 may also include a processor. Each of these components may be in communication with one another (e.g., via one or more buses).

Receiver 710 may receive information such as packets, user data, or control information associated with various information channels (*e.g.,* control channels, data channels, and information related to indication channel techniques for low latency wireless communications, *etc.).* Information may be passed on to other components of the device. The receiver 710 may be an example of aspects of the transceiver 935 described with reference to FIG. 9. The receiver 710 may utilize a single antenna or a set of antennas.

UE low latency communications manager 715 may be an example of aspects of the UE low latency communications manager 915 described with reference to FIG. 9. UE low latency communications manager 715 may also include periodic resource manager 725, indication channel manager 730, and puncturing monitor 735.

Periodic resource manager 725 may identify periodic wireless resources for first wireless communications having a first duration TTI, the periodic wireless resources within a set of wireless resources allocated for second wireless communications having a second duration TTI, where the first duration TTI is shorter than the second duration TTI. In some cases, the periodic resource manager 725 may receive an activation signal to initiate monitoring of one or more indication channel resources, and receive, subsequent to receiving the activation signal, a deactivation signal to discontinue the monitoring. In some cases, the periodic wireless resources are associated with a first subset of mini-slots of time resources, and where the first subset of mini-slots of time resources do not include the one or more indication channel resources. In some cases, the configuration information indicates one or more of time resources or frequency resources of the periodic wireless resources.

Indication channel manager 730 may identify one or more indication channel resources outside of (e.g., between one or more of) the periodic wireless resources. Puncturing monitor 735 may monitor the one or more indication channel resources for an indication that at least a portion of the first wireless communications are transmitted in a subset of wireless resources outside of the periodic wireless resources, receive such an indication over the one or more indication channel resources, and disregard wireless transmissions received over the subset of wireless resources based on the indication.

Transmitter 720 may transmit signals generated by other components of the device. In some examples, the transmitter 720 may be collocated with a receiver 710 in a transceiver module. For example, the transmitter 720 may be an example of aspects of the transceiver 935 described with reference to FIG. 9. The transmitter 720 may utilize a single antenna or a set of antennas.

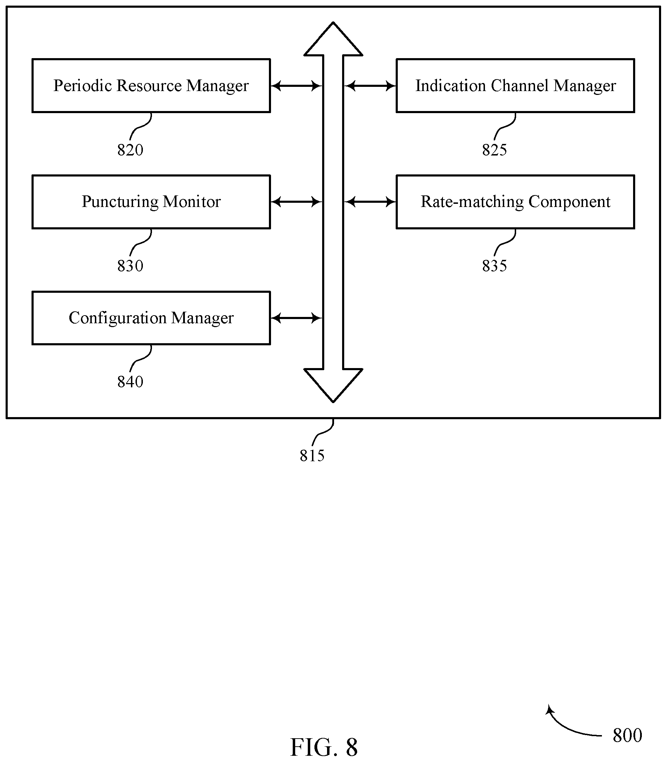

**FIG. 8** shows a block diagram 800 of a UE low latency communications manager 815 that supports indication channel techniques for low latency wireless communications in accordance with aspects of the present disclosure. The UE low latency communications manager 815 may be an example of aspects of a UE low latency communications manager 615, a UE low latency communications manager 715, or a UE low latency communications manager 915 described with reference to FIGs. 6, 7, and 9. The UE low latency communications manager 815 may include periodic resource manager 820, indication channel manager 825, puncturing monitor 830, rate-matching component 835, and configuration manager 840. Each of these modules may communicate, directly or indirectly, with one another (*e.g.,* via one or more buses).

Periodic resource manager 820 may identify periodic wireless resources for first wireless communications having a first duration TTI, the periodic wireless resources within a set of wireless resources allocated for second wireless communications having a second duration TTI, where the first duration TTI is shorter than the second duration TTI. In some cases, the periodic resource manager 820 may receive an activation signal to initiate monitoring of one or more indication channel resources, and receive, subsequent to receiving the activation signal, a deactivation signal to discontinue the monitoring. In some cases, the periodic wireless resources are associated with a first subset of mini-slots of time resources, and where the first subset of mini-slots of time resources do not include the one or more indication channel resources. In some cases, the configuration information indicates one or more of time resources or frequency resources of the periodic wireless resources.

Indication channel manager 825 may identify one or more indication channel resources outside of (e.g., between one or more of) the periodic wireless resources. Puncturing monitor 830 may monitor the one or more indication channel resources for an indication that at least a portion of the first wireless communications are transmitted in a subset of wireless resources outside of the periodic wireless resources, receive the indication over the one or more indication channel resources, and disregard wireless transmissions received over the subset of wireless resources based on the indication.

Rate-matching component 835 may rate-match the second wireless communications around the periodic wireless resources within the set of wireless resources and transmit/receive the second wireless communications according to the rate-matching over the set of wireless resources.

Configuration manager 840 may receive configuration information that indicates the periodic wireless resources. In some cases, the configuration information is received via radio resource control (RRC) signaling.

**FIG. 9** shows a diagram of a system 900 including a device 905 that supports indication channel techniques for low latency wireless communications in accordance with aspects of the present disclosure. Device 905 may be an example of or include the components of wireless device 605, wireless device 705, or a UE 115 as described above, *e.g.,* with reference to FIGs. 1, 6 and 7. Device 905 may include components for bi-directional voice and data communications including components for transmitting and receiving communications, including UE low latency communications manager 915, processor 920, memory 925, software 930, transceiver 935, antenna 940, and I/O controller 945. These components may be in electronic communication via one or more busses (*e.g.,* bus 910). Device 905 may communicate wirelessly with one or more base stations 105.

Processor 920 may include an intelligent hardware device, (*e.g.,* a general-purpose processor, a DSP, a central processing unit (CPU), a microcontroller, an ASIC, an FPGA, a programmable logic device, a discrete gate or transistor logic component, a discrete hardware component, or any combination thereof). In some cases, processor 920 may be configured to operate a memory array using a memory controller. In other cases, a memory controller may be integrated into processor 920. Processor 920 may be configured to execute computer-readable instructions stored in a memory to perform various functions (*e.g.,* functions or tasks supporting indication channel techniques for low latency wireless communications).

Memory 925 may include random access memory (RAM) and read only memory (ROM). The memory 925 may store computer-readable, computer-executable software 930 including instructions that, when executed, cause the processor to perform various functions described herein. In some cases, the memory 925 may contain, among other things, a basic input/output system (BIOS) which may control basic hardware and/or software operation such as the interaction with peripheral components or devices.

Software 930 may include code to implement aspects of the present disclosure, including code to support indication channel techniques for low latency wireless communications. Software 930 may be stored in a non-transitory computer-readable medium such as system memory or other memory. In some cases, the software 930 may not be directly executable by the processor but may cause a computer (*e.g.,* when compiled and executed) to perform functions described herein.

Transceiver 935 may communicate bi-directionally, via one or more antennas, wired, or wireless links as described above. For example, the transceiver 935 may represent a wireless transceiver and may communicate bi-directionally with another wireless transceiver. The transceiver 935 may also include a modem to modulate the packets and provide the modulated packets to the antennas for transmission, and to demodulate packets received from the antennas.

In some cases, the wireless device may include a single antenna 940. However, in some cases the device may have more than one antenna 940, which may be capable of concurrently transmitting or receiving multiple wireless transmissions.

I/O controller 945 may manage input and output signals for device 905. I/O controller 945 may also manage peripherals not integrated into device 905. In some cases, I/O controller 945 may represent a physical connection or port to an external peripheral. In some cases, I/O controller 945 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, I/O controller 945 may represent or interact with a modem, a keyboard, a mouse, a touchscreen, or a similar device. In some cases, I/O controller 945 may be implemented as part of a processor. In some cases, a user may interact with device 905 via I/O controller 945 or via hardware components controlled by I/O controller 945.

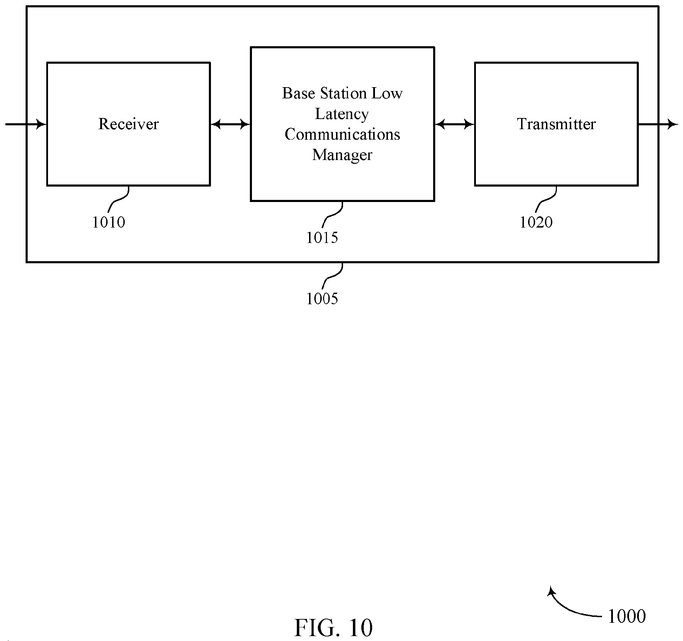

**FIG. 10** shows a block diagram 1000 of a wireless device 1005 that supports indication channel techniques for low latency wireless communications in accordance with aspects of the present disclosure. Wireless device 1005 may be an example of aspects of a base station 105 as described with reference to FIG. 1. Wireless device 1005 may include receiver 1010, base station low latency communications manager 1015, and transmitter 1020. Wireless device 1005 may also include a processor. Each of these components may be in communication with one another (e.g., via one or more buses).

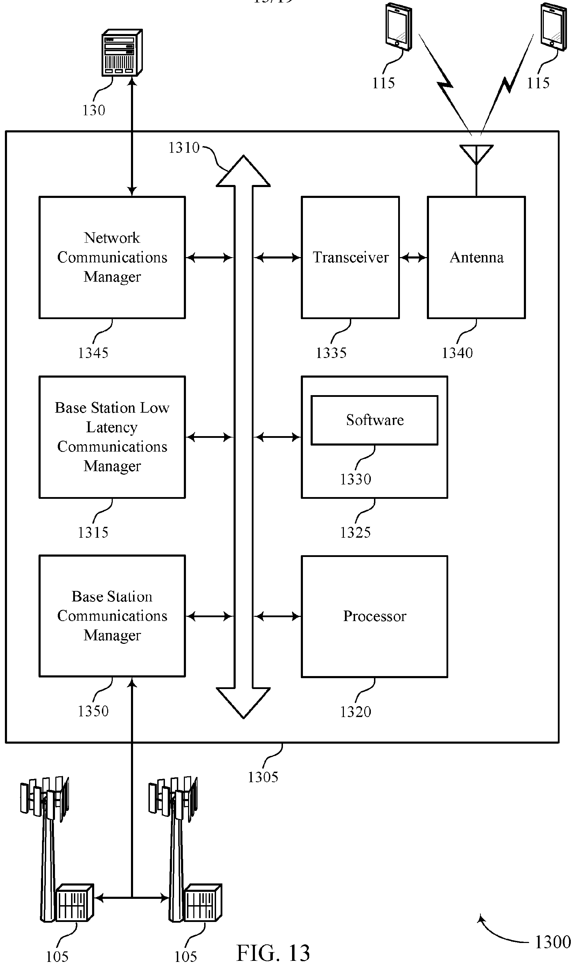

Receiver 1010 may receive information such as packets, user data, or control information associated with various information channels (*e.g.,* control channels, data channels, and information related to indication channel techniques for low latency wireless communications, *etc.).* Information may be passed on to other components of the device. The receiver 1010 may be an example of aspects of the transceiver 1335 described with reference to FIG. 13. The receiver 1010 may utilize a single antenna or a set of antennas.

Base station low latency communications manager 1015 may be an example of aspects of the base station low latency communications manager 1315 described with reference to FIG. 13.

Base station low latency communications manager 1015 and/or at least some of its various sub-components may be implemented in hardware, software executed by a processor, firmware, or any combination thereof. If implemented in software executed by a processor, the functions of the base station low latency communications manager 1015 and/or at least some of its various sub-components may be executed by a general-purpose processor, a DSP, an ASIC, an FPGA or other programmable logic device, discrete gate or transistor logic, discrete hardware components, or any combination thereof designed to perform the functions described in the present disclosure. The base station low latency communications manager 1015 and/or at least some of its various sub-components may be physically located at various positions, including being distributed such that portions of functions are implemented at different physical locations by one or more physical devices. In some examples, base station low latency communications manager 1015 and/or at least some of its various sub-components may be a separate and distinct component in accordance with various aspects of the present disclosure. In other examples, base station low latency communications manager 1015 and/or at least some of its various sub-components may be combined with one or more other hardware components, including but not limited to an I/O component, a transceiver, a network server, another computing device, one or more other components described in the present disclosure, or a combination thereof in accordance with various aspects of the present disclosure.

Base station low latency communications manager 1015 may configure periodic wireless resources for first wireless communications having a first duration TTI, the periodic wireless resources within a set of wireless resources allocated for second wireless communications having a second duration TTI, where the first duration TTI is shorter than the second duration TTI, configure one or more indication channel resources outside of the periodic wireless resources, and transmit one or more parameters associated with the periodic wireless resources and the one or more indication channel resources.

Transmitter 1020 may transmit signals generated by other components of the device. In some examples, the transmitter 1020 may be collocated with a receiver 1010 in a transceiver module. For example, the transmitter 1020 may be an example of aspects of the transceiver 1335 described with reference to FIG. 13. The transmitter 1020 may utilize a single antenna or a set of antennas.

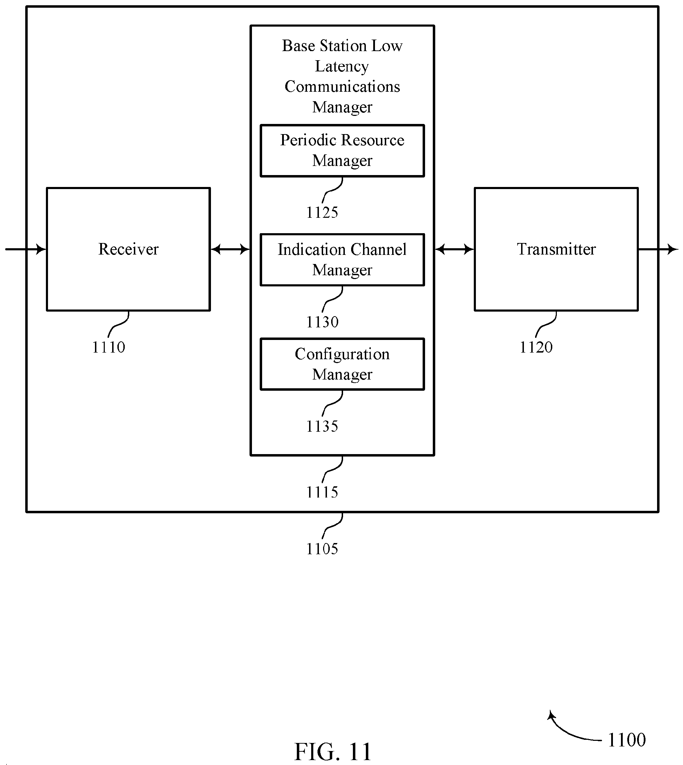

**FIG. 11** shows a block diagram 1100 of a wireless device 1105 that supports indication channel techniques for low latency wireless communications in accordance with aspects of the present disclosure. Wireless device 1105 may be an example of aspects of a wireless device 1005 or a base station 105 as described with reference to FIGs. 1 and 10. Wireless device 1105 may include receiver 1110, base station low latency communications manager 1115, and transmitter 1120. Wireless device 1105 may also include a processor. Each of these components may be in communication with one another (*e.g.,* via one or more buses).

Receiver 1110 may receive information such as packets, user data, or control information associated with various information channels (*e.g.,* control channels, data channels, and information related to indication channel techniques for low latency wireless communications, *etc*.). Information may be passed on to other components of the device. The receiver 1110 may be an example of aspects of the transceiver 1335 described with reference to FIG. 13. The receiver 1110 may utilize a single antenna or a set of antennas.

Base station low latency communications manager 1115 may be an example of aspects of the base station low latency communications manager 1315 described with reference to FIG. 13. Base station low latency communications manager 1115 may also include periodic resource manager 1125, indication channel manager 1130, and configuration manager 1135.

Periodic resource manager 1125 may configure periodic wireless resources for first wireless communications having a first duration TTI, the periodic wireless resources within a set of wireless resources allocated for second wireless communications having a second duration TTI, where the first duration TTI is shorter than the second duration TTI. In some cases, the periodic wireless resources are associated with a first subset of mini-slots of time resources, and where the first subset of mini-slots of time resources do not include indication channel resources.

Indication channel manager 1130 may configure one or more indication channel resources outside of the periodic wireless resources. Configuration manager 1135 may transmit one or more parameters associated with the periodic wireless resources and the one or more indication channel resources. In some cases, the transmitting includes transmitting the one or more parameters to a UE that indicates the periodic wireless resources. In some cases, the one or more parameters are transmitted via RRC signaling. In some cases, the one or more parameters indicate one or more of time resources or frequency resources of the periodic wireless resources.

Transmitter 1120 may transmit signals generated by other components of the device. In some examples, the transmitter 1120 may be collocated with a receiver 1110 in a transceiver module. For example, the transmitter 1120 may be an example of aspects of the transceiver 1335 described with reference to FIG. 13. The transmitter 1120 may utilize a single antenna or a set of antennas.

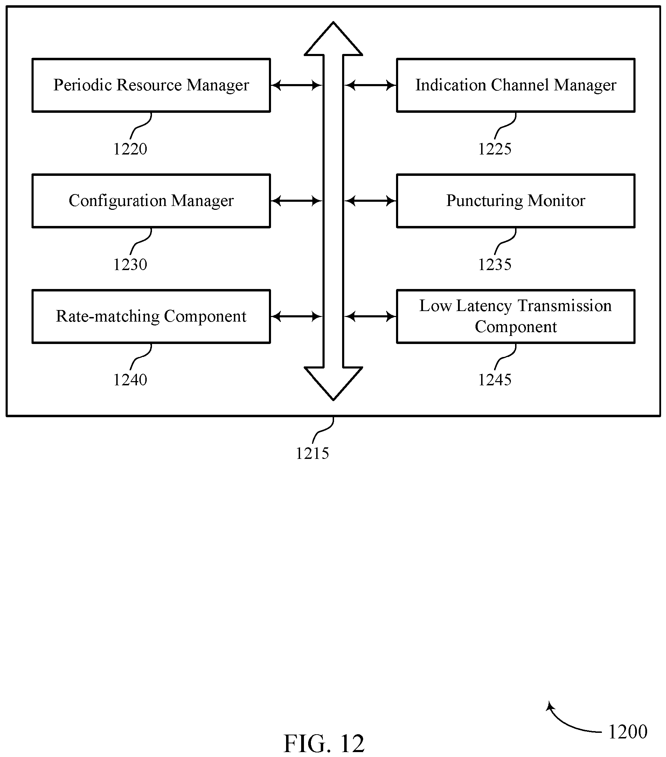

**FIG. 12** shows a block diagram 1200 of a base station low latency communications manager 1215 that supports indication channel techniques for low latency wireless communications in accordance with aspects of the present disclosure. The base station low latency communications manager 1215 may be an example of aspects of a base station low latency communications manager 1315 described with reference to FIGs. 10, 11, and 13. The base station low latency communications manager 1215 may include periodic resource manager 1220, indication channel manager 1225, configuration manager 1230, puncturing monitor 1235, rate-matching component 1240, and low latency transmission component 1245. Each of these modules may communicate, directly or indirectly, with one another (*e.g.,* via one or more buses).

Periodic resource manager 1220 may configure periodic wireless resources for first wireless communications having a first duration TTI, the periodic wireless resources within a set of wireless resources allocated for second wireless communications having a second duration TTI, where the first duration TTI is shorter than the second duration TTI. In some cases, the periodic wireless resources are associated with a first subset of mini-slots of time resources, and where the first subset of mini-slots of time resources do not include the one or more indication channel resources.

Indication channel manager 1225 may configure one or more indication channel resources outside of the periodic wireless resources. Configuration manager 1230 may transmit one or more parameters associated with the periodic wireless resources and the one or more indication channel resources. In some cases, the transmitting includes transmitting the one or more parameters to a UE that indicates the periodic wireless resources. In some cases, the one or more parameters are transmitted via RRC signaling. In some cases, the one or more parameters indicate one or more of time resources or frequency resources of the periodic wireless resources.

Puncturing monitor 1235 may determine that at least a portion of the first wireless communications are to be transmitted in a subset of wireless resources outside of the periodic wireless resources and transmit, via the one or more indication channel resources, an indication that at least the portion of the first wireless communications are being transmitted in the subset of wireless resources.

Rate-matching component 1240 may rate-match the second wireless communications around the periodic wireless resources and transmit the second wireless communications according to the rate-matching over the set of wireless resources.

Low latency transmission component 1245 may transmit at least a portion of the first wireless communications over the periodic wireless resources, determine that data traffic is present to be transmitted via the first wireless communications, transmit an activation signal to the UE to initiate the monitoring of the one or more indication channel resources, transmit the data traffic via the first wireless communications, determine, subsequent to transmitting the data traffic, that data traffic is no longer present for transmission via the first wireless communications, and transmit, responsive to the determining that data traffic is no longer present, a deactivation signal to the UE to discontinue the monitoring of the one or more indication channel resources.

**FIG. 13** shows a diagram of a system 1300 including a device 1305 that supports indication channel techniques for low latency wireless communications in accordance with aspects of the present disclosure. Device 1305 may be an example of or include the components of base station 105 as described above, *e.g.,* with reference to FIG. 1. Device 1305 may include components for bi-directional voice and data communications including components for transmitting and receiving communications, including base station low latency communications manager 1315, processor 1320, memory 1325, software 1330, transceiver 1335, antenna 1340, network communications manager 1345, and base station communications manager 1350. These components may be in electronic communication via one or more busses (*e.g.,* bus 1310). Device 1305 may communicate wirelessly with one or more UEs 115.

Processor 1320 may include an intelligent hardware device, (*e.g.,* a general-purpose processor, a DSP, a CPU, a microcontroller, an ASIC, an FPGA, a programmable logic device, a discrete gate or transistor logic component, a discrete hardware component, or any combination thereof). In some cases, processor 1320 may be configured to operate a memory array using a memory controller. In other cases, a memory controller may be integrated into processor 1320. Processor 1320 may be configured to execute computer-readable instructions stored in a memory to perform various functions (*e.g.,* functions or tasks supporting indication channel techniques for low latency wireless communications).

Memory 1325 may include RAM and ROM. The memory 1325 may store computer-readable, computer-executable software 1330 including instructions that, when executed, cause the processor to perform various functions described herein. In some cases, the memory 1325 may contain, among other things, a BIOS which may control basic hardware and/or software operation such as the interaction with peripheral components or devices.

Software 1330 may include code to implement aspects of the present disclosure, including code to support indication channel techniques for low latency wireless communications. Software 1330 may be stored in a non-transitory computer-readable medium such as system memory or other memory. In some cases, the software 1330 may not be directly executable by the processor but may cause a computer (*e.g.,* when compiled and executed) to perform functions described herein.

Transceiver 1335 may communicate bi-directionally, via one or more antennas, wired, or wireless links as described above. For example, the transceiver 1335 may represent a wireless transceiver and may communicate bi-directionally with another wireless transceiver. The transceiver 1335 may also include a modem to modulate the packets and provide the modulated packets to the antennas for transmission, and to demodulate packets received from the antennas.

In some cases, the wireless device may include a single antenna 1340. However, in some cases the device may have more than one antenna 1340, which may be capable of concurrently transmitting or receiving multiple wireless transmissions.

Network communications manager 1345 may manage communications with the core network (*e.g.,* via one or more wired backhaul links). For example, the network communications manager 1345 may manage the transfer of data communications for client devices, such as one or more UEs 115.

Base station communications manager 1350 may manage communications with other base station 105, and may include a controller or scheduler for controlling communications with UEs 115 in cooperation with other base stations 105. For example, the base station communications manager 1350 may coordinate scheduling for transmissions to UEs 115 for various interference mitigation techniques such as beamforming or joint transmission. In some examples, base station communications manager 1350 may provide an X2 interface within an Long Term Evolution (LTE)/LTE-A wireless communication network technology to provide communication between base stations 105.

**FIG. 14** shows a flowchart illustrating a method 1400 for indication channel techniques for low latency wireless communications in accordance with aspects of the present disclosure. The operations of method 1400 may be implemented by a UE 115 or its components as described herein. For example, the operations of method 1400 may be performed by a UE low latency communications manager as described with reference to FIGs. 6 through 9. In some examples, a UE 115 may execute a set of codes to control the functional elements of the device to perform the functions described below. Additionally or alternatively, the UE 115 may perform aspects of the functions described below using special-purpose hardware.

At block 1405 the UE 115 may identify periodic wireless resources for first wireless communications having a first duration TTI, the periodic wireless resources within a set of wireless resources allocated for second wireless communications having a second duration TTI, wherein the first duration TTI is shorter than the second duration TTI. The operations of block 1405 may be performed according to the methods described with reference to FIGs. 1 through 5. In certain examples, aspects of the operations of block 1405 may be performed by a periodic resource manager as described with reference to FIGs. 6 through 9.

At block 1410 the UE 115 may identify one or more indication channel resources outside of the periodic wireless resources. The operations of block 1410 may be performed according to the methods described with reference to FIGs. 1 through 5. In certain examples, aspects of the operations of block 1410 may be performed by an indication channel manager as described with reference to FIGs. 6 through 9.

At block 1415 the UE 115 may monitor the one or more indication channel resources for an indication that at least a portion of the first wireless communications are transmitted in a subset of wireless resources outside of the periodic wireless resources. The operations of block 1415 may be performed according to the methods described with reference to FIGs. 1 through 5. In certain examples, aspects of the operations of block 1415 may be performed by a puncturing monitor as described with reference to FIGs. 6 through 9.

At optional block 1420 the UE 115 may receive the indication over the one or more indication channel resources. The operations of block 1420 may be performed according to the methods described with reference to FIGs. 1 through 5. In certain examples, aspects of the operations of block 1420 may be performed by a puncturing monitor as described with reference to FIGs. 6 through 9.

At optional block 1425 the UE 115 may disregard wireless transmissions received over the subset of wireless resources based at least in part on the indication. The operations of block 1425 may be performed according to the methods described with reference to FIGs. 1 through 5. In certain examples, aspects of the operations of block 1425 may be performed by a puncturing monitor as described with reference to FIGs. 6 through 9.

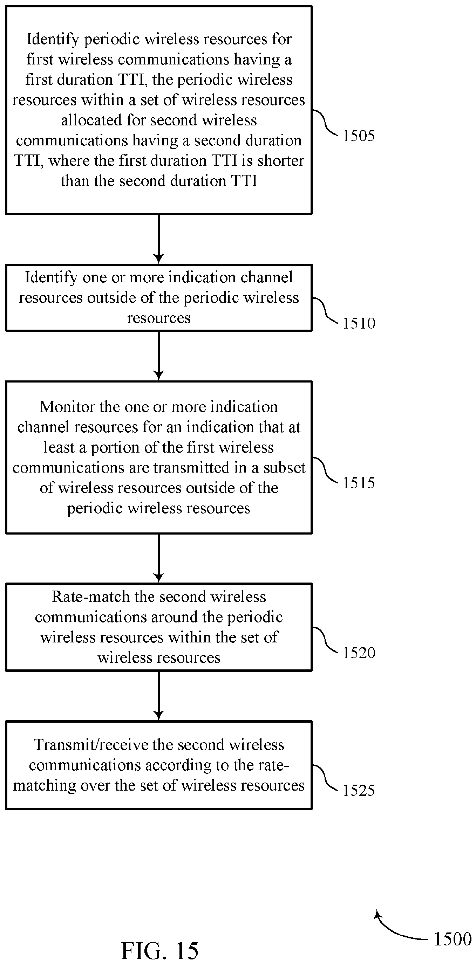

**FIG. 15** shows a flowchart illustrating a method 1500 for indication channel techniques for low latency wireless communications in accordance with aspects of the present disclosure. The operations of method 1500 may be implemented by a UE 115 or its components as described herein. For example, the operations of method 1500 may be performed by a UE low latency communications manager as described with reference to FIGs. 6 through 9. In some examples, a UE 115 may execute a set of codes to control the functional elements of the device to perform the functions described below. Additionally or alternatively, the UE 115 may perform aspects of the functions described below using special-purpose hardware.

At block 1505 the UE 115 may identify periodic wireless resources for first wireless communications having a first duration TTI, the periodic wireless resources within a set of wireless resources allocated for second wireless communications having a second duration TTI, wherein the first duration TTI is shorter than the second duration TTI. The operations of block 1505 may be performed according to the methods described with reference to FIGs. 1 through 5. In certain examples, aspects of the operations of block 1505 may be performed by a periodic resource manager as described with reference to FIGs. 6 through 9.

At block 1510 the UE 115 may identify one or more indication channel resources outside of the periodic wireless resources. The operations of block 1510 may be performed according to the methods described with reference to FIGs. 1 through 5. In certain examples, aspects of the operations of block 1510 may be performed by an indication channel manager as described with reference to FIGs. 6 through 9.

At block 1515 the UE 115 may monitor the one or more indication channel resources for an indication that at least a portion of the first wireless communications are transmitted in a subset of wireless resources outside of the periodic wireless resources. The operations of block 1515 may be performed according to the methods described with reference to FIGs. 1 through 5. In certain examples, aspects of the operations of block 1515 may be performed by a puncturing monitor as described with reference to FIGs. 6 through 9.

At block 1520 the UE 115 may rate-match the second wireless communications around the periodic wireless resources within the set of wireless resources. The operations of block 1520 may be performed according to the methods described with reference to FIGs. 1 through 5. In certain examples, aspects of the operations of block 1520 may be performed by a rate-matching component as described with reference to FIGs. 6 through 9.

At block 1525 the UE 115 may transmit/receive the second wireless communications according to the rate-matching over the set of wireless resources. The operations of block 1525 may be performed according to the methods described with reference to FIGs. 1 through 5. In certain examples, aspects of the operations of block 1525 may be performed by a rate-matching component as described with reference to FIGs. 6 through 9.

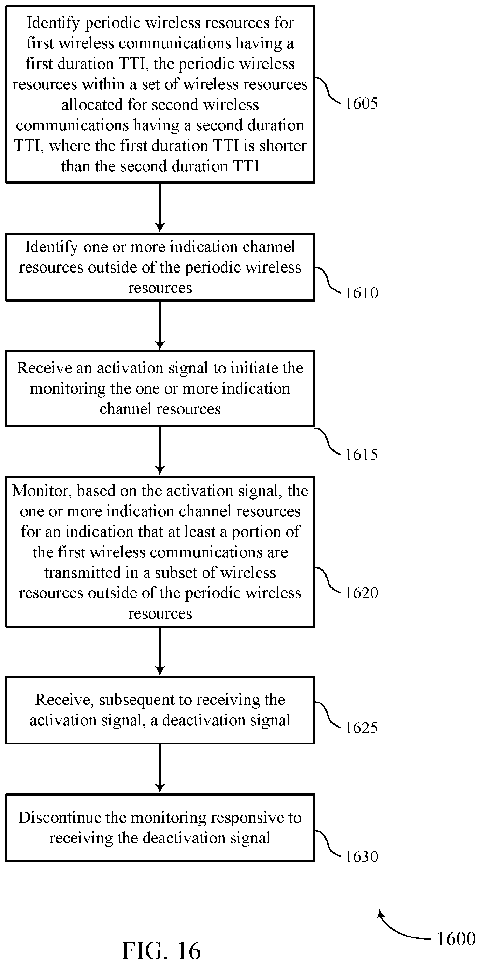

**FIG. 16** shows a flowchart illustrating a method 1600 for indication channel techniques for low latency wireless communications in accordance with aspects of the present disclosure. The operations of method 1600 may be implemented by a UE 115 or its components as described herein. For example, the operations of method 1600 may be performed by a UE low latency communications manager as described with reference to FIGs. 6 through 9. In some examples, a UE 115 may execute a set of codes to control the functional elements of the device to perform the functions described below. Additionally or alternatively, the UE 115 may perform aspects of the functions described below using special-purpose hardware.

At block 1605 the UE 115 may identify periodic wireless resources for first wireless communications having a first duration TTI, the periodic wireless resources within a set of wireless resources allocated for second wireless communications having a second duration TTI, wherein the first duration TTI is shorter than the second duration TTI. The operations of block 1605 may be performed according to the methods described with reference to FIGs. 1 through 5. In certain examples, aspects of the operations of block 1605 may be performed by a periodic resource manager as described with reference to FIGs. 6 through 9.

At block 1610 the UE 115 may identify one or more indication channel resources outside of the periodic wireless resources. The operations of block 1610 may be performed according to the methods described with reference to FIGs. 1 through 5. In certain examples, aspects of the operations of block 1610 may be performed by an indication channel manager as described with reference to FIGs. 6 through 9.

At block 1615 the UE 115 may receive an activation signal to initiate the monitoring the one or more indication channel resources, and wherein the monitoring is performed responsive to the activation signal. The operations of block 1615 may be performed according to the methods described with reference to FIGs. 1 through 5. In certain examples, aspects of the operations of block 1615 may be performed by a periodic resource manager as described with reference to FIGs. 6 through 9.

At block 1620 the UE 115 may monitor, based on the activation signal, the one or more indication channel resources for an indication that at least a portion of the first wireless communications are transmitted in a subset of wireless resources outside of the periodic wireless resources. The operations of block 1620 may be performed according to the methods described with reference to FIGs. 1 through 5. In certain examples, aspects of the operations of block 1620 may be performed by a puncturing monitor as described with reference to FIGs. 6 through 9.

At block 1625 the UE 115 may receive, subsequent to receiving the activation signal, a deactivation signal. The operations of block 1625 may be performed according to the methods described with reference to FIGs. 1 through 5. In certain examples, aspects of the operations of block 1625 may be performed by a periodic resource manager as described with reference to FIGs. 6 through 9.

At block 1630 the UE 115 may discontinue the monitoring of the periodic resources responsive to receiving the deactivation signal. In such cases, an eMBB UE may monitor the indication channel for all time resources (e.g., mini-slots) for an indication of low latency transmissions that may puncture eMBB transmissions. Similarly, a low latency UE may the indication channel for all time resources (e.g., mini-slots) for an indication of low latency transmissions to/from the low latency UE. The operations of block 1630 may be performed according to the methods described with reference to FIGs. 1 through 5. In certain examples, aspects of the operations of block 1630 may be performed by a periodic resource manager as described with reference to FIGs. 6 through 9.

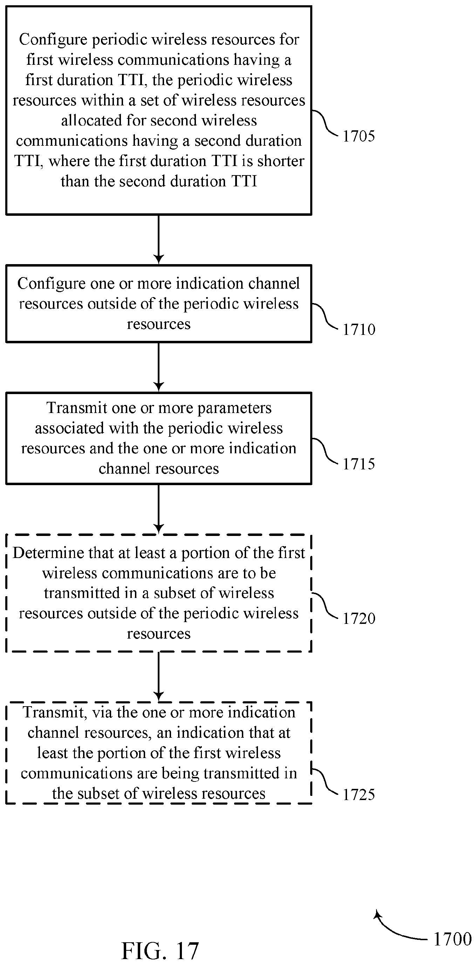

**FIG. 17** shows a flowchart illustrating a method 1700 for indication channel techniques for low latency wireless communications in accordance with aspects of the present disclosure. The operations of method 1700 may be implemented by a base station 105 or its components as described herein. For example, the operations of method 1700 may be performed by a base station low latency communications manager as described with reference to FIGs. 10 through 13. In some examples, a base station 105 may execute a set of codes to control the functional elements of the device to perform the functions described below. Additionally or alternatively, the base station 105 may perform aspects of the functions described below using special-purpose hardware.

At block 1705 the base station 105 may configure periodic wireless resources for first wireless communications having a first duration TTI, the periodic wireless resources within a set of wireless resources allocated for second wireless communications having a second duration TTI, wherein the first duration TTI is shorter than the second duration TTI. The operations of block 1705 may be performed according to the methods described with reference to FIGs. 1 through 5. In certain examples, aspects of the operations of block 1705 may be performed by a periodic resource manager as described with reference to FIGs. 10 through 13.

At block 1710 the base station 105 may configure one or more indication channel resources outside of the periodic wireless resources. The operations of block 1710 may be performed according to the methods described with reference to FIGs. 1 through 5. In certain examples, aspects of the operations of block 1710 may be performed by an indication channel manager as described with reference to FIGs. 10 through 13.

At block 1715 the base station 105 may transmit one or more parameters associated with the periodic wireless resources and the one or more indication channel resources. The operations of block 1715 may be performed according to the methods described with reference to FIGs. 1 through 5. In certain examples, aspects of the operations of block 1715 may be performed by a configuration manager as described with reference to FIGs. 10 through 13.

At optional block 1720 the base station 105 may determine that at least a portion of the first wireless communications are to be transmitted in a subset of wireless resources outside of the periodic wireless resources. The operations of block 1720 may be performed according to the methods described with reference to FIGs. 1 through 5. In certain examples, aspects of the operations of block 1720 may be performed by a puncturing monitor as described with reference to FIGs. 10 through 13.

At optional block 1725 the base station 105 may transmit, via the one or more indication channel resources, an indication that at least the portion of the first wireless communications are being transmitted in the subset of wireless resources. The operations of block 1725 may be performed according to the methods described with reference to FIGs. 1 through 5. In certain examples, aspects of the operations of block 1725 may be performed by a puncturing monitor as described with reference to FIGs. 10 through 13.

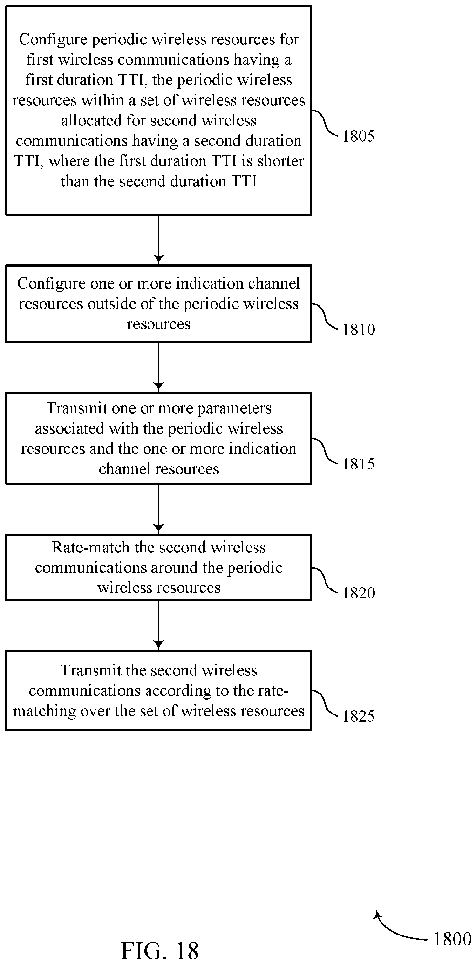

**FIG. 18** shows a flowchart illustrating a method 1800 for indication channel techniques for low latency wireless communications in accordance with aspects of the present disclosure. The operations of method 1800 may be implemented by a base station 105 or its components as described herein. For example, the operations of method 1800 may be performed by a base station low latency communications manager as described with reference to FIGs. 10 through 13. In some examples, a base station 105 may execute a set of codes to control the functional elements of the device to perform the functions described below. Additionally or alternatively, the base station 105 may perform aspects of the functions described below using special-purpose hardware.

At block 1805 the base station 105 may configure periodic wireless resources for first wireless communications having a first duration TTI, the periodic wireless resources within a set of wireless resources allocated for second wireless communications having a second duration TTI, wherein the first duration TTI is shorter than the second duration TTI. The operations of block 1805 may be performed according to the methods described with reference to FIGs. 1 through 5. In certain examples, aspects of the operations of block 1805 may be performed by a periodic resource manager as described with reference to FIGs. 10 through 13.

At block 1810 the base station 105 may configure one or more indication channel resources outside of the periodic wireless resources. The operations of block 1810 may be performed according to the methods described with reference to FIGs. 1 through 5. In certain examples, aspects of the operations of block 1810 may be performed by an indication channel manager as described with reference to FIGs. 10 through 13.

At block 1815 the base station 105 may transmit one or more parameters associated with the periodic wireless resources and the one or more indication channel resources. The operations of block 1815 may be performed according to the methods described with reference to FIGs. 1 through 5. In certain examples, aspects of the operations of block 1815 may be performed by a configuration manager as described with reference to FIGs. 10 through 13.

At block 1820 the base station 105 may rate-match the second wireless communications around the periodic wireless resources. The operations of block 1820 may be performed according to the methods described with reference to FIGs. 1 through 5. In certain examples, aspects of the operations of block 1820 may be performed by a rate-matching component as described with reference to FIGs. 10 through 13.

At block 1825 the base station 105 may transmit the second wireless communications according to the rate-matching over the set of wireless resources. The operations of block 1825 may be performed according to the methods described with reference to FIGs. 1 through 5. In certain examples, aspects of the operations of block 1825 may be performed by a rate-matching component as described with reference to FIGs. 10 through 13.

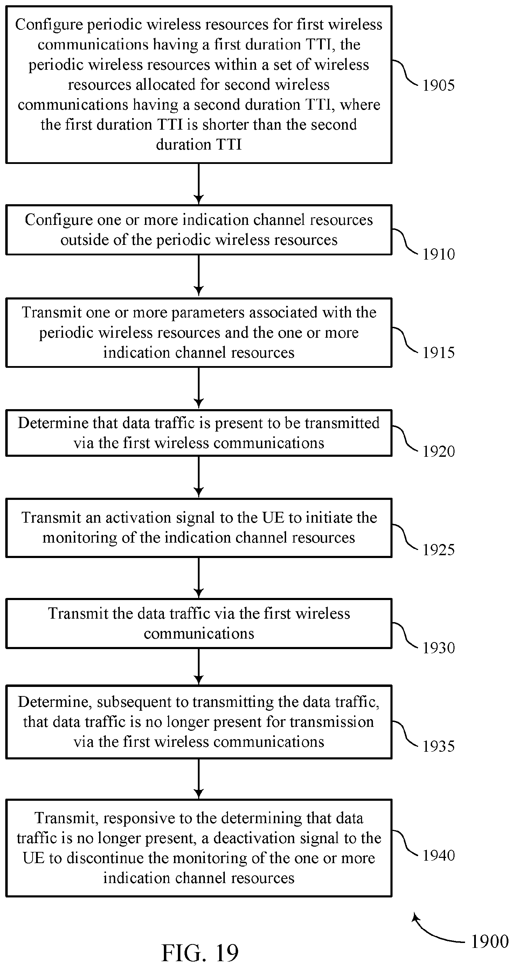

**FIG. 19** shows a flowchart illustrating a method 1900 for indication channel techniques for low latency wireless communications in accordance with aspects of the present disclosure. The operations of method 1900 may be implemented by a base station 105 or its components as described herein. For example, the operations of method 1900 may be performed by a base station low latency communications manager as described with reference to FIGs. 10 through 13. In some examples, a base station 105 may execute a set of codes to control the functional elements of the device to perform the functions described below. Additionally or alternatively, the base station 105 may perform aspects of the functions described below using special-purpose hardware.

At block 1905 the base station 105 may configure periodic wireless resources for first wireless communications having a first duration TTI, the periodic wireless resources within a set of wireless resources allocated for second wireless communications having a second duration TTI, wherein the first duration TTI is shorter than the second duration TTI. The operations of block 1905 may be performed according to the methods described with reference to FIGs. 1 through 5. In certain examples, aspects of the operations of block 1905 may be performed by a periodic resource manager as described with reference to FIGs. 10 through 13.

At block 1910 the base station 105 may configure one or more indication channel resources outside of the periodic wireless resources. The operations of block 1910 may be performed according to the methods described with reference to FIGs. 1 through 5. In certain examples, aspects of the operations of block 1910 may be performed by an indication channel manager as described with reference to FIGs. 10 through 13.

At block 1915 the base station 105 may transmit one or more parameters associated with the periodic wireless resources and the one or more indication channel resources. The operations of block 1915 may be performed according to the methods described with reference to FIGs. 1 through 5. In certain examples, aspects of the operations of block 1915 may be performed by a configuration manager as described with reference to FIGs. 10 through 13. In some cases, the transmitting comprises transmitting the one or more parameters to a UE that indicates the periodic wireless resources.

At block 1920 the base station 105 may determine that data traffic is present to be transmitted via the first wireless communications. The operations of block 1920 may be performed according to the methods described with reference to FIGs. 1 through 5. In certain examples, aspects of the operations of block 1920 may be performed by a low latency transmission component as described with reference to FIGs. 10 through 13.

At block 1925 the base station 105 may transmit an activation signal to the UE to initiate the monitoring of the one or more indication channel resources. The operations of block 1925 may be performed according to the methods described with reference to FIGs. 1 through 5. In certain examples, aspects of the operations of block 1925 may be performed by a low latency transmission component as described with reference to FIGs. 10 through 13.

At block 1930 the base station 105 may transmit the data traffic via the first wireless communications. The operations of block 1930 may be performed according to the methods described with reference to FIGs. 1 through 5. In certain examples, aspects of the operations of block 1930 may be performed by a low latency transmission component as described with reference to FIGs. 10 through 13.

At block 1935 the base station 105 may determine, subsequent to transmitting the data traffic, that data traffic is no longer present for transmission via the first wireless communications. The operations of block 1935 may be performed according to the methods described with reference to FIGs. 1 through 5. In certain examples, aspects of the operations of block 1935 may be performed by a low latency transmission component as described with reference to FIGs. 10 through 13.

At block 1940 the base station 105 may transmit, responsive to the determining that data traffic is no longer present, a deactivation signal to the UE to discontinue the monitoring of the one or more indication channel resources. The operations of block 1940 may be performed according to the methods described with reference to FIGs. 1 through 5. In certain examples, aspects of the operations of block 1940 may be performed by a low latency transmission component as described with reference to FIGs. 10 through 13.

It should be noted that the methods described above describe possible implementations, and that the operations and the steps may be rearranged or otherwise modified and that other implementations are possible. Furthermore, aspects from two or more of the methods may be combined.

Techniques described herein may be used for various wireless communications systems such as code division multiple access (CDMA), time division multiple access (TDMA), frequency division multiple access (FDMA), orthogonal frequency division multiple access (OFDMA), single carrier frequency division multiple access (SC-FDMA), and other systems. The terms "system" and "network" are often used interchangeably. A code division multiple access (CDMA) system may implement a radio technology such as CDMA2000, Universal Terrestrial Radio Access (UTRA), *etc.* CDMA2000 covers IS-2000, IS-95, and IS-856 standards. IS-2000 Releases may be commonly referred to as CDMA2000 1X, 1X, *etc.* IS-856 (TIA-856) is commonly referred to as CDMA2000 1xEV-DO, High Rate Packet Data (HRPD), *etc.* UTRA includes Wideband CDMA (WCDMA) and other variants of CDMA. A time division multiple access (TDMA) system may implement a radio technology such as Global System for Mobile Communications (GSM).

An orthogonal frequency division multiple access (OFDMA) system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, *etc.* UTRA and E-UTRA are part of Universal Mobile Telecommunications system (UMTS). 3GPP Long Term Evolution (LTE) and LTE-Advanced (LTE-A) are releases of Universal Mobile Telecommunications System (UMTS) that use E-UTRA. UTRA, E-UTRA, UMTS, LTE, LTE-A, NR, and Global System for Mobile communications (GSM) are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies. While aspects an LTE or an NR system may be described for purposes of example, and LTE or NR terminology may be used in much of the description, the techniques described herein are applicable beyond LTE or NR applications.

In LTE/LTE-A networks, including such networks described herein, the term evolved node B (eNB) may be generally used to describe the base stations. The wireless communications system or systems described herein may include a heterogeneous LTE/LTE-A or NR network in which different types of evolved node B (eNBs) provide coverage for various geographical regions. For example, each eNB, gNB or base station may provide communication coverage for a macro cell, a small cell, or other types of cell. The term "cell" may be used to describe a base station, a carrier or component carrier associated with a base station, or a coverage area (*e.g.,* sector, *etc.)* of a carrier or base station, depending on context.

Base stations may include or may be referred to by those skilled in the art as a base transceiver station, a radio base station, an access point, a radio transceiver, a NodeB, eNodeB (eNB), next generation NodeB (gNB), Home NodeB, a Home eNodeB, or some other suitable terminology. The geographic coverage area for a base station may be divided into sectors making up only a portion of the coverage area. The wireless communications system or systems described herein may include base stations of different types *(e.g.,* macro or small cell base stations). The UEs described herein may be able to communicate with various types of base stations and network equipment including macro eNBs, small cell eNBs, gNBs, relay base stations, and the like. There may be overlapping geographic coverage areas for different technologies.

A macro cell generally covers a relatively large geographic area (e.g., several kilometers in radius) and may allow unrestricted access by UEs with service subscriptions with the network provider. A small cell is a lower-powered base station, as compared with a macro cell, that may operate in the same or different (*e.g.,* licensed, unlicensed, *etc.)* frequency bands as macro cells. Small cells may include pico cells, femto cells, and micro cells according to various examples. A pico cell, for example, may cover a small geographic area and may allow unrestricted access by UEs with service subscriptions with the network provider. A femto cell may also cover a small geographic area (*e.g.,* a home) and may provide restricted access by UEs having an association with the femto cell (*e.g.,* UEs in a closed subscriber group (CSG), UEs for users in the home, and the like). An eNB for a macro cell may be referred to as a macro eNB. An eNB for a small cell may be referred to as a small cell eNB, a pico eNB, a femto eNB, or a home eNB. An eNB may support one or multiple (*e.g.,* two, three, four, and the like) cells (*e.g.,* component carriers).

The wireless communications system or systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

The downlink transmissions described herein may also be called forward link transmissions while the uplink transmissions may also be called reverse link transmissions. Each communication link described herein-including, for example, wireless communications system 100 and 200 of FIGs. 1 and 2-may include one or more carriers, where each carrier may be a signal made up of multiple sub-carriers (*e.g.,* waveform signals of different frequencies).

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (*e.g.,* a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items (for example, a list of items prefaced by a phrase such as "at least one of" or "one or more of") indicates an inclusive list such that, for example, a list of at least one of A, B, or C means A or B or C or AB or AC or BC or ABC (*i.e.,* A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media may comprise RAM, ROM, electrically erasable programmable read only memory (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, digital subscriber line (DSL), or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

## Claims

1. A method (1400) for wireless communication by a user equipment, UE, comprising:
identifying (1405) periodic wireless resources for first wireless communications in a mini slot, the periodic wireless resources being located within a set of wireless resources allocated for second wireless communications in a slot, wherein:
i, the first wireless communications use a first duration transmission time interval, TTI;
ii, the second wireless communications use a second duration TTI;
iii, the first duration TTI is shorter than the second duration TTI;
iv, the first wireless communications are low latency communications being less delay-tolerant than the second wireless communications; wherein one or more indication channel resources are configured:
in mini slots during time periods in which periodic low latency communications are not supported, and;
only in mini-slots (405) that do not have periodic low latency resources during time periods in which periodic low latency communications are supported;
monitoring (1415) the one or more indication channel resources (430) for an indication that retransmissions (435) of the first wireless communications are transmitted in a subset of wireless resources outside of the periodic wireless resources,
rate-matching the second wireless communications around the periodic wireless resources within the set of wireless resources; and
transmitting or receiving the second wireless communications according to the rate-matching over the set of wireless resources.

2. The method of claim 1, further comprising:
receiving the indication over the one or more indication channel resources; and
disregarding wireless transmissions of the second wireless communications received over the subset of wireless resources based at least in part on the indication, or:
the method of claim 1, further comprising:
receiving configuration information that indicates the periodic wireless resources.

3. The method of claim 2, wherein, when receiving configuration information that indicates the periodic wireless resources, the configuration information is received via RRC signalling, or the configuration information indicates one or more of time resources or frequency resources of the periodic wireless resources.

4. The method of claim 2, further comprising:
when receiving configuration information that indicates the periodic wireless resources:
receiving an activation signal to initiate the monitoring the one or more indication channel resources, and wherein the monitoring is performed responsive to the activation signal;
receiving, subsequent to receiving the activation signal, a deactivation signal; and
discontinuing the monitoring responsive to receiving the deactivation signal.

5. A method (1700) for wireless communication by a base station, BS, comprising:
configuring (1710) periodic wireless resources for first wireless communications in a mini slot, the periodic wireless resources being located within a set of wireless resources allocated for second wireless communications in a slot
i, the first wireless communications use a first duration transmission time interval, TTI;
ii, the second wireless communications use a second duration TTI;
iii, the first duration TTI is shorter than the second duration TTI;
iv, the first wireless communications are low latency communications being less delay tolerant than the second wireless communications;
wherein one or more indication channel resources are configured:
in mini slots during time periods in which periodic low latency communications are not supported, and;
only in mini-slots (405) that do not have periodic low latency resources during time periods in which periodic low latency communications are supported;
transmitting (1715) one or more parameters associated with the periodic wireless resources and the one or more indication channel resources, indicating that retransmissions of the first wireless transmissions of the first wireless communications are transmitted in a subset of wireless resources outside of the periodic wireless resources,
rate-matching the second wireless communications around the periodic wireless resources; and
transmitting the second wireless communications according to the rate-matching over the set of wireless resources.

6. The method of claim 5, further comprising:
determining that at least a portion of the first wireless communications are to be transmitted in a subset of wireless resources outside of the periodic wireless resources; and
transmitting, via the one or more indication channel resources, an indication that at least the portion of the first wireless communications are being transmitted in the subset of wireless resources, or:
further comprising:
transmitting at least a portion of the first wireless communications over the periodic wireless resources.

7. The method of claim 5, wherein the transmitting comprises transmitting the one or more parameters to a UE that indicates the periodic wireless resources.

8. The method of claim 7, wherein the one or more parameters are transmitted via RRC signalling.

9. The method of claim 7, further comprising:
determining that data traffic is present to be transmitted via the first wireless communications;
transmitting an activation signal to the UE to initiate the monitoring of the one or more indication channel resources;
transmitting the data traffic via the first wireless communications;
determining, subsequent to transmitting the data traffic, that data traffic is no longer present for transmission via the first wireless communications; and
transmitting, responsive to the determining that data traffic is no longer present, a deactivation signal to the UE to discontinue the monitoring of the one or more indication channel resources, or: wherein the one or more parameters indicate one or more of time resources or frequency resources of the periodic wireless resources.

10. An apparatus (115, 605, 705) for wireless communication, comprising:
means for identifying (615, 715) periodic wireless resources for first wireless communications in a mini slot, the periodic wireless resources being located within a set of wireless resources allocated for second wireless communications in a slot:
i, the first wireless communications use a first duration transmission time interval, TTI;
ii, the second wireless communications use a second duration TTI;
iii, the first duration TTI is shorter than the second duration TTI;
iv, the first wireless communications are low latency communications being less delay tolerant than the second wireless communications;
wherein one or more indication channel resources are configured:
in mini slots during time periods in which periodic low latency communications are not supported, and;
only in mini-slots (405) that do not have periodic low latency resources during time periods in which periodic low latency communications are supported;
means for monitoring (615, 715) the one or more indication channel resources (430) for an indication that retransmissions (435) of the first wireless communications are transmitted in a subset of wireless resources outside of the periodic wireless resources
means for rate-matching the second wireless communications around the periodic wireless resources within the set of wireless resources; and
means for transmitting or receive the second wireless communication according to the rate-matching over the set of wireless resources.

11. The apparatus of claim 10, further comprising:
means for receiving the indication over the one or more indication channel resources; and
means for disregarding the second wireless transmissions received over the subset of wireless resources based at least in part on the indication, or:
the apparatus of claim 10 further comprising:
means for receiving configuration information that indicates the periodic wireless resources.

12. The apparatus of claim 11, further comprising, when the apparatus comprises means for receiving configuration information that indicates the periodic wireless resources:
means for receiving an activation signal to initiate the monitoring the one or more indication channel resources, and wherein the monitoring is performed responsive to the activation signal;
means for receiving, subsequent to receiving the activation signal, a deactivation signal; and
means for discontinuing the monitoring responsive to receiving the deactivation signal.

13. An apparatus (1005) for wireless communication, comprising:
means for configuring periodic wireless resources for first wireless communications in a mini slot, the periodic wireless resources being located within a set of wireless resources allocated for second wireless communications in a slot:
i, the first wireless communications having a first duration transmission time interval, TTI;
ii, the second wireless communications having a second duration TTI;
iii, the first duration TTI is shorter than the second duration TTI;
iv, the first wireless communications are low latency communications being less delay-tolerant than the second wireless communications;
wherein one or more indication channel resources are configured:
in mini slots during time periods in which periodic low latency communications are not supported;
only in mini-slots (405) that do not have periodic low latency resources during time periods in which periodic low latency communications are supported;
means for transmitting (1020) one or more parameters associated with the periodic wireless resources and the one or more indication channel resources, indicating that retransmissions of the first wireless transmissions of the first wireless communications are transmitted in a subset of wireless resources outside of the periodic wireless resources,
means for rate-matching the second wireless communications around the periodic wireless resources; and
means for transmitting the second wireless communications according to the rate-matching over the set of wireless resources.

14. The apparatus of claim 13, further comprising:
means for determining that at least a portion of the first wireless communications are to be transmitted in a subset of wireless resources outside of the periodic wireless resources; and
means for transmitting, via the one or more indication channel resources, an indication that at least the portion of the first wireless communications are being transmitted in the subset of wireless resources

15. The apparatus of claim 13,
wherein the means for transmitting the one or more parameters further comprise:
means for transmitting the one or more parameters to a UE that indicates the period wireless resources.

## Patentansprüche

1. Ein Verfahren (1400) für eine drahtlose Kommunikation durch ein Benutzergerät (User Equipment bzw. UE), aufweisend:
Identifizieren (1405) von periodischen, drahtlosen Ressourcen für erste, drahtlose Kommunikationen in einem Minischlitz, wobei die periodischen, drahtlosen Ressourcen in einem Satz von drahtlosen Ressourcen, die für zweite, drahtlose Kommunikationen in einem Schlitz zugewiesen sind, enthalten sind, wobei:
i) die ersten, drahtlosen Kommunikationen ein Sendezeitintervall (Transmission Time Interval bzw. TTI) mit einer ersten Dauer verwenden,
ii) die zweiten, drahtlosen Kommunikationen ein TTI mit einer zweiten Dauer verwenden,
iii) das TTI der ersten Dauer kürzer als das TTI der zweiten Dauer ist,
iv) die ersten, drahtlosen Kommunikationen Kommunikationen niedriger Latenz sind, die weniger verzögerungstolerant sind als die zweiten drahtlosen Kommunikationen,
wobei eine oder mehrere Angabekanalressourcen konfiguriert sind:
in Minischlitzen während Zeitperioden, in denen keine periodischen Kommunikationen niedriger Latenz unterstützt werden, und
nur in Minischlitzen (405), die keine periodischen Ressourcen niedriger Latenz während Zeitperioden, in denen periodische Kommunikationen niedriger Latenz unterstützt werden, aufweisen,
Überwachen (1415) der einen oder der mehreren Angabekanalressourcen (430) auf eine Angabe dazu, dass erneute Sendungen (435) der ersten drahtlosen Kommunikationen in einem Teilsatz von drahtlosen Ressourcen außerhalb der periodischen drahtlosen Ressourcen gesendet werden,
Ratenabstimmen der zweiten, drahtlosen Kommunikationen um die periodischen, drahtlosen Ressourcen in dem Satz von drahtlosen Ressourcen herum, und
Senden oder Empfangen der zweiten, drahtlosen Kommunikationen gemäß der Ratenabstimmung über den Satz von drahtlosen Ressourcen.

2. Verfahren nach Anspruch 1, das weiterhin aufweist:
Empfangen der Angabe über den einen oder die mehreren Angabekanalressourcen, und
Verwerfen von drahtlosen Sendungen der zweiten, drahtlosen Kommunikationen, die über den Teilsatz von drahtlosen Ressourcen empfangen werden, basierend wenigstens teilweise auf der Angabe, oder
das Verfahren nach Anspruch 1, das weiterhin aufweist:
Empfangen von Konfigurationsinformationen, die die periodischen drahtlosen Ressourcen angeben.

3. Verfahren nach Anspruch 2, wobei, wenn Konfigurationsinformationen, die die periodischen, drahtlosen Ressourcen angeben, empfangen werden, die Konfigurationsinformationen über eine Funkressourcensteuerung (Radio Resource Control bzw. RRC)-Signalisierung empfangen werden oder die Konfigurationsinformationen Zeitressourcen und/oder Frequenzressourcen der periodischen, drahtlosen Ressourcen angeben.

4. Verfahren nach Anspruch 2, das weiterhin aufweist:
wenn Konfigurationsinformationen, die die periodischen, drahtlosen Ressourcen angeben, empfangen werden,
Empfangen eines Aktivierungssignals für das Einleiten des Überwachens der einen oder der mehreren Angabekanalressourcen, wobei das Überwachen in Antwort auf das Aktivierungssignal durchgeführt wird,
Empfangen, auf das Empfangen des Aktivierungssignals folgend, eines Deaktivierungssignals, und
Abbrechen des Überwachens in Antwort auf das Empfangen des Deaktivierungssignals.

5. Ein Verfahren (1700) für eine drahtlose Kommunikation durch eine Basisstation (BS), aufweisend:
Konfigurieren (1710) von periodischen, drahtlosen Ressourcen für erste, drahtlose Kommunikationen in einem Minischlitz, wobei die periodischen, drahtlosen Ressourcen in einem Satz von drahtlosen Ressourcen, die für zweite, drahtlose Kommunikationen in einem Schlitz zugewiesen sind, enthalten sind, wobei:
i) die ersten, drahtlosen Kommunikationen ein Sendezeitintervall (Transmission Time Interval bzw. TTI) mit einer ersten Dauer verwenden,
ii) die zweiten, drahtlosen Kommunikationen ein TTI mit einer zweiten Dauer verwenden,
iii) das TTI der ersten Dauer kürzer als das TTI der zweiten Dauer ist,
iv) die ersten, drahtlosen Kommunikationen Kommunikationen niedriger Latenz sind, die weniger verzögerungstolerant sind als die zweiten, drahtlosen Kommunikationen,
wobei eine oder mehrere Angabekanalressourcen konfiguriert sind:
in Minischlitzen während Zeitperioden, in denen keine periodischen Kommunikationen niedriger Latenz unterstützt werden, und
nur in Minischlitzen (405), die keine periodischen Ressourcen niedriger Latenz während Zeitperioden, in denen periodische Kommunikationen niedriger Latenz unterstützt werden, aufweisen,
Senden (1715) eines oder mehrerer Parameter, die mit den periodischen, drahtlosen Ressourcen und der einen oder den mehreren Angabekanalressourcen assoziiert sind und angeben, dass erneute Sendungen der ersten drahtlosen Sendungen der ersten drahtlosen Kommunikationen in einem Teilsatz von drahtlosen Ressourcen außerhalb der periodischen, drahtlosen Ressourcen gesendet werden,
Ratenabstimmen der zweiten, drahtlosen Kommunikationen um die periodischen, drahtlosen Ressourcen herum, und
Senden der zweiten, drahtlosen Kommunikationen gemäß der Ratenabstimmung über den Satz von drahtlosen Ressourcen.

6. Verfahren nach Anspruch 5, das weiterhin aufweist:
Bestimmen, dass wenigstens ein Teil der ersten, drahtlosen Kommunikationen in einem Teilsatz von drahtlosen Ressourcen außerhalb der periodischen, drahtlosen Ressourcen gesendet werden sollen, und
Senden, über die eine oder die mehreren Angabekanalressourcen, einer Angabe dazu, dass wenigstens der Teil der ersten, drahtlosen Kommunikationen in dem Teilsatz von drahtlosen Ressourcen gesendet werden,
oder weiterhin aufweist:
Senden wenigstens eines Teils der ersten, drahtlosen Kommunikationen über die periodischen, drahtlosen Ressourcen.

7. Verfahren nach Anspruch 5, wobei das Senden das Senden des einen oder der mehreren Parameter an ein UE, das die periodischen, drahtlosen Ressourcen angibt, aufweist.

8. Verfahren nach Anspruch 7, wobei der eine oder die mehreren Parameter über eine Funkressourcensteuerung (Radio Resource Control bzw. RRC)-Signalisierung gesendet werden.

9. Verfahren nach Anspruch 7, das weiterhin aufweist:
Bestimmen, dass ein über die ersten, drahtlosen Kommunikationen zu sendender Datenverkehr vorhanden ist,
Senden eines Aktivierungssignals an das UE für das Einleiten des Überwachens der einen oder der mehreren Angabekanalressourcen,
Senden des Datenverkehrs über die ersten, drahtlosen Kommunikationen,
Bestimmen, auf das Senden des Datenverkehrs folgend, dass kein Datenverkehr mehr für das Senden über die ersten, drahtlosen Kommunikationen vorhanden ist, und
Senden, in Antwort auf das Bestimmen, dass kein Datenverkehr mehr vorhanden ist, eines Deaktivierungssignals an das UE für das Abbrechen des Überwachens des einen oder der mehreren Angabekanalressourcen, oder wobei der eine oder die mehreren Parameter Zeitressourcen und/oder Frequenzressourcen der periodischen, drahtlosen Ressourcen angeben.

10. Eine Vorrichtung (115, 605, 705) für eine drahtlose Kommunikation, aufweisend:
Mittel zum Identifizieren (615, 715) von periodischen, drahtlosen Ressourcen für erste drahtlose Kommunikationen in einem Minischlitz, wobei die periodischen, drahtlosen Ressourcen in einem Satz von drahtlosen Ressourcen, die für zweite, drahtlose Kommunikationen in einem Schlitz zugewiesen sind, enthalten sind, wobei:
i) die ersten, drahtlosen Kommunikationen ein Sendezeitintervall (Transmission Time Interval bzw. TTI) mit einer ersten Dauer verwenden,
ii) die zweiten, drahtlosen Kommunikationen ein TTI mit einer zweiten Dauer verwenden,
iii) das TTI der ersten Dauer kürzer als das TTI der zweiten Dauer ist,
iv) die ersten, drahtlosen Kommunikationen Kommunikationen niedriger Latenz sind, die weniger verzögerungstolerant sind als die zweiten, drahtlosen Kommunikationen,
wobei eine oder mehrere Angabekanalressourcen konfiguriert sind:
in Minischlitzen während Zeitperioden, in denen keine periodischen Kommunikationen niedriger Latenz unterstützt werden, und
nur in Minischlitzen (405), die keine periodischen Ressourcen niedriger Latenz während Zeitperioden, in denen periodische Kommunikationen niedriger Latenz unterstützt werden, aufweisen,
Mittel zum Überwachen (615, 715) der einen oder der mehreren Angabekanalressourcen (430) auf eine Angabe dazu, dass erneute Sendungen (435) der ersten, drahtlosen Kommunikationen in einem Teilsatz von drahtlosen Ressourcen außerhalb der periodischen, drahtlosen Ressourcen gesendet werden,
Mittel zum Ratenabstimmen der zweiten, drahtlosen Kommunikationen um die periodischen, drahtlosen Ressourcen in dem Satz von drahtlosen Ressourcen herum, und
Mittel zum Senden oder Empfangen der zweiten, drahtlosen Kommunikationen gemäß der Ratenabstimmung über den Satz von drahtlosen Ressourcen.

11. Vorrichtung nach Anspruch 10, die weiterhin aufweist:
Mittel zum Empfangen der Angabe über den einen oder die mehreren Angabekanalressourcen, und
Mittel zum Verwerfen der zweiten, drahtlosen Sendungen, die über den Teilsatz von drahtlosen Ressourcen empfangen werden, basierend wenigstens teilweise auf der Angabe, oder
die Vorrichtung nach Anspruch 10, die weiterhin aufweist:
Mittel zum Empfangen von Konfigurationsinformationen, die die periodischen, drahtlosen Ressourcen angeben.

12. Vorrichtung nach Anspruch 11, die weiterhin, wenn die Vorrichtung Mittel zum Empfangen von Konfigurationsinformationen, die die periodischen, drahtlosen Ressourcen angeben, aufweist, aufweist:
Mittel zum Empfangen eines Aktivierungssignals für das Einleiten des Überwachens der einen oder der mehreren Angabekanalressourcen, wobei das Überwachen in Antwort auf das Aktivierungssignal durchgeführt wird,
Mittel zum Empfangen, auf das Empfangen des Aktivierungssignals folgend, eines Deaktivierungssignals, und
Mittel zum Abbrechen des Überwachens in Antwort auf das Empfangen des Deaktivierungssignals.

13. Eine Vorrichtung (1005) für eine drahtlose Kommunikation, aufweisend:
Mittel zum Konfigurieren von periodischen, drahtlosen Ressourcen für erste, drahtlose Kommunikationen in einem Minischlitz, wobei die periodischen, drahtlosen Ressourcen in einem Satz von drahtlosen Ressourcen, die für zweite, drahtlose Kommunikationen in einem Schlitz zugewiesen sind, enthalten sind, wobei:
i) die ersten, drahtlosen Kommunikationen ein Sendezeitintervall (Transmission Time Interval bzw. TTI) mit einer ersten Dauer aufweisen,
ii) die zweiten, drahtlosen Kommunikationen ein TTI mit einer zweiten Dauer aufweisen,
iii) das TTI der ersten Dauer kürzer als das TTI der zweiten Dauer ist,
iv) die ersten, drahtlosen Kommunikationen Kommunikationen niedriger Latenz sind, die weniger verzögerungstolerant sind als die zweiten drahtlosen Kommunikationen,
wobei eine oder mehrere Angabekanalressourcen konfiguriert sind:
in Minischlitzen während Zeitperioden, in denen keine periodischen Kommunikationen niedriger Latenz unterstützt werden, und
nur in Minischlitzen (405), die keine periodischen Ressourcen niedriger Latenz während Zeitperioden, in denen periodische Kommunikationen niedriger Latenz unterstützt werden, aufweisen,
Mittel zum Senden (1020) eines oder mehrerer Parameter, die mit den periodischen, drahtlosen Ressourcen und der einen oder den mehreren Angabekanalressourcen assoziiert sind und angeben, dass erneute Sendungen der ersten, drahtlosen Sendungen der ersten, drahtlosen Kommunikationen in einem Teilsatz von drahtlosen Ressourcen außerhalb der periodischen, drahtlosen Ressourcen gesendet werden,
Mittel zum Ratenabstimmen der zweiten, drahtlosen Kommunikationen um die periodischen, drahtlosen Ressourcen herum, und
Mittel zum Senden der zweiten, drahtlosen Kommunikationen gemäß der Ratenabstimmung über den Satz von drahtlosen Ressourcen.

14. Vorrichtung nach Anspruch 13, die weiterhin aufweist:
Mittel zum Bestimmen, dass wenigstens ein Teil der ersten, drahtlosen Kommunikationen in einem Teilsatz von drahtlosen Ressourcen außerhalb der periodischen, drahtlosen Ressourcen gesendet werden sollen, und
Mittel zum Senden, über die eine oder die mehreren Angabekanalressourcen, einer Angabe dazu, dass wenigstens der Teil der ersten, drahtlosen Kommunikationen in dem Teilsatz von drahtlosen Ressourcen gesendet werden.

15. Vorrichtung nach Anspruch 13,
wobei die Mittel zum Senden des einen oder der mehreren Parameter weiterhin aufweisen:
Mittel zum Senden des einen oder der mehreren Parameter an ein UE, das die periodischen, drahtlosen Ressourcen angibt.

## Revendications

1. Procédé (1400) de communication sans fil par un équipement d'utilisateur, UE, comprenant :
une identification (1405) de ressources sans fil périodiques pour de premières communications sans fil dans un mini-créneau, les ressources sans fil périodiques étant situées au sein d'un ensemble de ressources sans fil attribuées pour de secondes communications sans fil dans un créneau, dans lequel :
i, les premières communications sans fil utilisent un intervalle de temps de transmission, TTI, de première durée ;
ii, les secondes communications sans fil utilisent un TTI de seconde durée ;
iii, le TTI de première durée est plus court que le TTI de seconde durée ;
iv, les premières communications sans fil sont des communications de faible latence moins tolérantes au retard que les secondes communications sans fil ; dans lequel une ou plusieurs ressources de canal d'indication sont configurées :
dans des mini-créneaux pendant des délais au cours desquels des communications de faible latence périodiques ne sont pas prises en charge ; et
uniquement dans des mini-créneaux (405) qui ne présentent pas de ressources de faible latence périodiques pendant des délais au cours desquels des communications de faible latence périodiques sont prises en charge ;
une surveillance (1415) des une ou plusieurs ressources de canal d'indication (430) pour une indication du fait que des retransmissions (435) des premières communications sans fil sont transmises dans un sous-ensemble de ressources sans fil en dehors des ressources sans fil périodiques,
une adaptation de débit des secondes communications sans fil autour des ressources sans fil périodiques au sein de l'ensemble de ressources sans fil ; et
une transmission ou une réception des secondes communications sans fil selon l'adaptation de débit sur l'ensemble de ressources sans fil.

2. Procédé selon la revendication 1, comprenant en outre :
une réception de l'indication sur les une ou plusieurs ressources de canal d'indication ; et
le fait d'ignorer des transmissions sans fil des secondes communications sans fil reçues sur le sous-ensemble de ressources sans fil sur la base au moins en partie de l'indication, ou :
le procédé selon la revendication 1, comprenant en outre :
une réception d'informations de configuration qui indiquent les ressources sans fil périodiques.

3. Procédé selon la revendication 2, dans lequel, lors d'une réception d'informations de configuration qui indiquent les ressources sans fil périodiques, les informations de configuration sont reçues par l'intermédiaire d'une signalisation RRC, ou les informations de configuration indiquent une ou plusieurs ressources de temps ou ressources de fréquence des ressources sans fil périodiques.

4. Procédé selon la revendication 2, comprenant en outre :
lors d'une réception d'informations de configuration qui indiquent les ressources sans fil périodiques :
une réception d'un signal d'activation pour lancer la surveillance des une ou plusieurs ressources de canal d'indication, et dans lequel la surveillance est réalisée en réponse au signal d'activation ;
une réception, suite à la réception du signal d'activation, d'un signal de désactivation ; et
un arrêt de la surveillance en réponse à la réception du signal de désactivation.

5. Procédé (1700) de communication sans fil par une station de base, BS, comprenant :
une configuration (1710) de ressources sans fil périodiques pour de premières communications sans fil dans un mini-créneau, les ressources sans fil périodiques étant situées au sein d'un ensemble de ressources sans fil attribuées pour de secondes communications sans fil dans un créneau,
i, les premières communications sans fil utilisent un intervalle de temps de transmission, TTI, de première durée ;
ii, les secondes communications sans fil utilisent un TTI de seconde durée ;
iii, le TTI de première durée est plus court que le TTI de seconde durée ;
iv, les premières communications sans fil sont des communications de faible latence moins tolérantes au retard que les secondes communications sans fil ;
dans lequel une ou plusieurs ressources de canal d'indication sont configurées :
dans des mini-créneaux pendant des délais au cours desquels des communications de faible latence périodiques ne sont pas prises en charge ; et
uniquement dans des mini-créneaux (405) qui ne présentent pas de ressources de faible latence périodiques pendant des délais au cours desquels des communications de faible latence périodiques sont prises en charge ;
une transmission (1715) d'un ou de plusieurs paramètres associés aux ressources sans fil périodiques et aux une ou plusieurs ressources de canal d'indication, indiquant que des retransmissions des premières transmissions sans fil des premières communications sans fil sont transmises dans un sous-ensemble de ressources sans fil en dehors des ressources sans fil périodiques,
une adaptation de débit des secondes communications sans fil autour des ressources sans fil périodiques ; et
une transmission des secondes communications sans fil selon l'adaptation de débit sur l'ensemble de ressources sans fil.

6. Procédé selon la revendication 5, comprenant en outre :
une détermination du fait qu'au moins une partie des premières communications sans fil doit être transmise dans un sous-ensemble de ressources sans fil en dehors des ressources sans fil périodiques ; et
une transmission, par l'intermédiaire des une ou plusieurs ressources de canal d'indication, d'une indication du fait qu'au moins la partie des premières communications sans fil est transmise dans le sous-ensemble des ressources sans fil ; ou :
comprenant en outre :
une transmission d'au moins une partie des premières communications sans fil sur les ressources sans fil périodiques.

7. Procédé selon la revendication 5, dans lequel la transmission comprend une transmission des un ou plusieurs paramètres à un UE qui indique les ressources sans fil périodiques.

8. Procédé selon la revendication 7, dans lequel les un ou plusieurs paramètres sont transmises par l'intermédiaire d'une signalisation RRC.

9. Procédé selon la revendication 7, comprenant en outre :
une détermination du fait qu'un trafic de données est présent pour être transmis par l'intermédiaire des premières communications sans fil ;
une transmission d'un signal d'activation à l'UE pour lancer la surveillance des une ou plusieurs ressources de canal d'indication ;
une transmission du trafic de données par l'intermédiaire des premières communications sans fil ;
une détermination, suite à une transmission du trafic de données, du fait qu'un trafic de données n'est plus présent pour une transmission par l'intermédiaire des premières communications sans fil ; et
une transmission, en réponse à la détermination du fait qu'un trafic de données n'est plus présent, d'un signal de désactivation à l'UE pour arrêter la surveillance des une ou plusieurs ressources de canal d'indication, ou : dans lequel les un ou plusieurs paramètres indiquent une ou plusieurs parmi des ressources de temps ou des ressources de fréquence des ressources sans fil périodiques.

10. Appareil (115, 605, 705) de communication sans fil, comprenant :
un moyen d'identification (615, 715) de ressources sans fil périodiques pour de premières communications sans fil dans un mini-créneau, les ressources sans fil périodiques étant situées au sein d'un ensemble de ressources sans fil attribuées pour de secondes communications sans fil dans un créneau :
i, les premières communications sans fil utilisent un intervalle de temps de transmission, TTI, de première durée ;
ii, les secondes communications sans fil utilisent un TTI de seconde durée ;
iii, le TTI de première durée est plus court que le TTI de seconde durée ;
iv, les premières communications sans fil sont des communications de faible latence moins tolérantes au retard que les secondes communications sans fil ;
dans lequel une ou plusieurs ressources de canal d'indication sont configurées :
dans des mini-créneaux pendant des délais au cours desquels des communications de faible latence périodiques ne sont pas prises en charge ; et
uniquement dans des mini-créneaux (405) qui ne présentent pas de ressources de faible latence périodiques pendant des délais au cours desquels des communications de faible latence périodiques sont prises en charge ;
un moyen de surveillance (615, 715) des une ou plusieurs ressources de canal d'indication (430) pour une indication du fait que des retransmissions (435) des premières communications sans fil sont transmises dans un sous-ensemble de ressources sans fil en dehors des ressources sans fil périodiques,
un moyen d'adaptation de débit des secondes communications sans fil autour des ressources sans fil périodiques au sein de l'ensemble de ressources sans fil ; et
un moyen de transmission ou de réception de la seconde communication sans fil selon l'adaptation de débit sur l'ensemble de ressources sans fil.

11. Appareil selon la revendication 10, comprenant en outre :
un moyen de réception de l'indication sur les une ou plusieurs ressources de canal d'indication ; et
un moyen permettant d'ignorer les secondes transmissions sans fil reçues sur le sous-ensemble de ressources sans fil sur la base au moins en partie de l'indication, ou :
l'appareil selon la revendication 10 comprenant en outre :
un moyen de réception d'informations de configuration qui indiquent les ressources sans fil périodiques.

12. Appareil selon la revendication 11, comprenant en outre, lorsque l'appareil comprend un moyen de réception d'informations de configuration qui indiquent les ressources sans fil périodiques :
un moyen de réception d'un signal d'activation pour lancer la surveillance des une ou plusieurs ressources de canal d'indication, et dans lequel la surveillance est réalisée en réponse au signal d'activation ;
un moyen de réception, suite à une réception du signal d'activation, d'un signal de désactivation ; et
un moyen d'arrêt de la surveillance en réponse à une réception du signal de désactivation.

13. Appareil (1005) de communication sans fil, comprenant :
un moyen de configuration de ressources sans fil périodiques pour de premières communications sans fil dans un mini-créneau, les ressources sans fil périodiques étant situées au sein d'un ensemble de ressources sans fil attribuées pour de secondes communications sans fil dans un créneau :
i, les premières communications sans fil ayant un intervalle de temps de transmission, TTI, de première durée ;
ii, les secondes communications sans fil ayant un TTI de seconde durée ;
iii, le TTI de première durée est plus court que le TTI de seconde durée ;
iv, les premières communications sans fil sont des communications de faible latence moins tolérantes au retard que les secondes communications sans fil ;
dans lequel une ou plusieurs ressources de canal d'indication sont configurées :
dans des mini-créneaux pendant des délais au cours desquels des communications de faible latence périodiques ne sont pas prises en charge ;
uniquement dans des mini-créneaux (405) qui ne présentent pas de ressources de faible latence périodiques pendant des délais au cours desquels des communications de faible latence périodiques sont prises en charge ;
un moyen de transmission (1020) d'un ou de plusieurs paramètres associés aux ressources sans fil périodiques et aux une ou plusieurs ressources de canal d'indication, indiquant que des retransmissions des premières transmissions sans fil des premières communications sans fil sont transmises dans un sous-ensemble de ressources sans fil en dehors des ressources sans fil périodiques,
un moyen d'adaptation de débit des secondes communications sans fil autour des ressources sans fil périodiques ; et
un moyen de transmission des secondes communications sans fil selon l'adaptation de débit sur l'ensemble de ressources sans fil.

14. Appareil selon la revendication 13, comprenant en outre :
un moyen de détermination du fait qu'au moins une partie des premières communications sans fil doit être transmise dans un sous-ensemble de ressources sans fil en dehors des ressources sans fil périodiques ; et
un moyen de transmission, par l'intermédiaire des une ou plusieurs ressources de canal d'indication, d'une indication du fait qu'au moins la partie des premières communications sans fil est transmise dans le sous-ensemble des ressources sans fil.

15. Appareil selon la revendication 13,
dans lequel le moyen de transmission des un ou plusieurs paramètres comprend en outre :
un moyen de transmission des un ou plusieurs paramètres à un UE qui indique les ressources sans fil périodiques.
